# EUROPÄISCHE PATENTSCHRIFT

(11) **EP 2 865 497 B1**
(45) Veröffentlichungstag und Bekanntmachung des Hinweises auf die Patenterteilung: **02.10.2019**
(21) Anmeldenummer: 14189926.0
(22) Anmeldetag: 22.10.2014
(51) Int. Cl.: B25J 9/16, G05B 19/401

(54) **Schleifroboter für einen Schiffsrumpf und Verfahren zum Schleifen eines Schiffsrumpfes**
Grinding robot for the hull of a vessel and method for grinding a ship's hull
Robot de ponçage pour une coque de navire et procédé de ponçage d'une coque de navire

(30) Priorität: 22.10.2013 DE 102013221431
(43) Veröffentlichungstag der Anmeldung: 29.04.2015
(73) Patentinhaber: Freese AG, 28237 Bremen (DE)
(72) Erfinder: Morschheuser, Markus, 28237 Bremen (DE); Bangert, Patrick, 82387 Antdorf (DE)
(74) Vertreter: Eisenführ Speiser

(56) Entgegenhaltungen:
- WO-A2-2008/110899
- GB-A- 2 447 455

## Beschreibung

Die Erfindung betrifft einen Schleifroboter für einen Schiffsrumpf umfassend einen mit einem beweglichen Schleifmittel ausgerüsteten Schleifkopf, der an einer Aktuatoreinrichtung befestigt ist, die den Schleifkopf mit einem Rahmengestell verbindet und in mindestens zwei zueinander senkrechten Richtungen relativ zu dem Rahmengestell innerhalb eines Bearbeitungsraumes bewegen kann. Ein zweiter Aspekt der Erfindung ist eine Materialauftragseinrichtung zum Auftragen einer Füllmasse auf einen Schiffsrumpf, mit einem Auftragskopf zum Abgeben der Füllmasse auf eine Schiffsrumpfoberfläche, der an einer Aktuatoreinrichtung befestigt ist, die den Schleifkopf mit einem Rahmengestell verbindet und in mindestens zwei zueinander senkrechten Richtungen relativ zu dem Rahmengestell innerhalb eines Bearbeitungsraumes bewegen kann. Ein weiterer Aspekt der Erfindung ist ein Verfahren zum Schleifen eines Schiffsrumpfes, indem ein mit einem Schleifmittel ausgerüsteter Schleifkopf entlang des Schiffsrumpfes mittels einer Aktuatoreinrichtung, die den Schleifkopf mit einem Rahmengestell verbindet, in mindestens zwei zueinander senkrechten Richtungen relativ zu dem Rahmengestell bewegt wird. Schließlich ist ein weitere Aspekt der Erfindung ein Verfahren zum Auftragen einer Füllmasse auf einen Schiffsrumpf.

Solche Schleifroboter, Auftragseinrichtungen, Schleifverfahren und Auftragsverfahren werden dazu eingesetzt, um die Oberfläche eines Schiffsrumpfes im Zuge einer Herstellung oder Überarbeitung eines Schiffsrumpfes zu glätten und hierbei Rauigkeiten und Unebenheiten zu beseitigen. Schleifroboter und Auftragseinrichtungen können insbesondere dazu eingesetzt werden, Schiffsrümpfe von Schiffen zu bearbeiten, die eine Länge von mehr als 10m haben und sind insbesondere bei Schiffen effizient einzusetzen, die eine Länge von mehr als 50m haben, weil ab dieser Größe die manuelle Schleifbearbeitung von Schiffen nicht mehr kosteneffizient durchgeführt werden kann.

Schleifroboter weisen dabei einen Schleifkopf auf, der ein Schleifmittel beinhaltet, das angetrieben ist und so eine Relativbewegung zwischen dem Schleifmittel und dem Schiffsrumpf erzeugt. Dies kann ein Schleifmittel nach Art eines Tellerschleifers oder eines Bandschleifers sein, bei dem ein Schleifteller rotiert beziehungsweise ein Schleifband umläuft. Ebenso sind oszillierende Bewegungen des Schleifmittels realisierbar. Der Schleifkopf wird durch den Schleifroboter in einer dieser Schleifmittelbewegung überlagerten Führungsbewegung entlang der Oberfläche des Schiffsrumpfes geführt. Durch diese Führungsbewegung wird die durch den Schleifprozess hergestellte Oberfläche definiert.

Es ist bekannt, solche Schleifroboter mittels einer manuellen Ansteuerung der Aktuatoren zur Bewegung des Schleifkopfes entlang des Schiffsrumpfes durch eine Bedienperson anzusteuern. Diese Steuerung durch eine Bedienperson ermöglicht es, unmittelbar während des Schleifvorgangs Kontrolle über die zu bearbeitenden Flächenabschnitte auszuüben und zu vermeiden, dass Bereiche des Schiffsrumpfes, die keine Schleifbearbeitung erhalten sollen, wie beispielsweise Fenster, Bullaugen oder dem Schiffsantrieb dienende Ein- und Aufbauten, vom Schleifvorgang auszunehmen. Nachteilig an dieser Steuerung durch eine Bedienperson ist jedoch die Fehleranfälligkeit und die erforderliche hohe Qualifikation der Bedienperson, die für eine präzise Bearbeitung nach dieser Methode erforderlich ist.

Es ist weiterhin bekannt, die durch den Schleifvorgang herzustellende Oberfläche in einer Vorabplanung zu definieren und aus dieser Vorabplanung Steuerungsdaten für den Schleifroboter zu erstellen. Grundsätzlich kann mit einer solchen Schleifmethode eine wirtschaftlich effizientere Schleifbearbeitung insbesondere an großen und auch gekrümmten Schiffsrumpfflächen erzielt werden. Nachteilig an dieser Vorgehensweise ist jedoch die hierfür erforderliche zeitintensive Definition der Flächengeometrie und Einjustierung des Schleifroboters am Schiffsrumpf zur Durchführung des Schleifvorgangs auf Grundlage der Steuerungsdaten. Zudem kann mit dieser Vorgehensweise keine automatisierte Schleifbearbeitung erfolgen, wenn in der zu bearbeitenden Schiffsrumpffläche Ein- oder Aufbauten, Fenster und der Gleichen vorhanden sind.

Ein weiteres Problem bei der Schleifbearbeitung von Schiffsrümpfen besteht darin, dass auf die strukturtragende Schiffsrumpfwand, die üblicherweise aus verschweißten Metallplatten besteht, ein Spachtel- oder Füllermaterial aufgetragen wird, um Unebenheiten zu glätten beziehungsweise Vertiefungen zu füllen. Durch den Auftrag dieses Spachtel- beziehungsweise Füllermaterials kann beim nachfolgenden Schleifprozess eine hydrodynamisch günstige Oberfläche erzeugt werden, indem eine glatte, von Unebenheiten freie Oberfläche erzeugt wird, ohne dass hierfür eine spanabhebende Bearbeitung der Metallwand des Schiffsrumpfes erforderlich ist. Durch diese Vorgehensweise kann die Standzeit des Schleifmittels signifikant erhöht werden, weil regelmäßig lediglich eine Schleifbearbeitung des Spachtel- beziehungsweise Füllermaterials erfolgt, nicht jedoch des strukturtragenden metallischen Rumpfwandmaterials.

Aus GB2447455A ist ein frei bewegbares Bearbeitungssystem zur Bearbeitung von Objekten mittels eines mehrachsigen Roboters bekannt. Basierend auf Messdaten einer Oberfläche wird dann der mehrachsige Roboter derart angesteuert, dass Oberflächenunebenheiten der Oberfläche des Objektes durch Materialauftrag oder -abtrag ausgeglichen werden können.

Aus EP1103310B1 und EP1813354B1 ist eine Vorrichtung zur Bearbeitung von Schiffsrümpfen bekannt. Diese Vorrichtung umfasst ein Werkzeug zur Analyse der Oberfläche, ein Werkzeug zum Aufbringen einer Strakverbindung und Werkzeuge zum Abtragen der aufgetragenen Strakverbindung durch Fräsen oder Schleifen. Die Werkzeuge sind an einem Roboter befestigt und werden computergesteuert geführt. Diese vorbekannte Vorrichtung führt ein sogenanntes Straken aus, bei dem der Schiffsrumpf vermessen und durch Materialauftrag auf den Rumpf und in alle bei der Vermessung erfassten Vertiefungen ein Materialüberschuß erzeugt wird, der in einem nachfolgenden Schleifprozess so abgetragen werden kann, dass eine insgesamt geglättete Oberfläche erzeugt wird. Das automatisierte Verfahren eignet sich für die Bearbeitung von regelmäßig verlaufenden Rumpfoberflächen, wie sie beispielsweise an Segelbooten vorliegen. Hier kann die Bearbeitung durch den Roboter in einem kontinuierlichen Arbeitsgang erfolgen und dadurch eine gleichmäßige Oberfläche bereits durch die Kontinuität der Bearbeitung erreicht werden. Bei Verwendung dieser Vorrichtung an Schiffsrümpfen treten verschiedene Probleme auf. Zum einen weisen Schiffsrümpfe regelmäßig vor- oder zurückstehende Einbauten wie Bullaugen oder Scheuerleisten auf. Eine kontinuierliche Bearbeitung und vorherige Oberflächenerfassung würde bei solchen Einbauten einerseits dazu führen, dass die Geometrie der Rumpfoberfläche in einer für die Funktionalität unerwünschten Weise verändert wird, beispielsweise indem die Scheuerleiste bündig und mit stetigem Oberflächenverlauf in die sie umgebende Oberfläche eingeebnet wird und hierzu erheblicher Materialauftrag erfolgt. Zudem kann die Funktionalität von Einbauten wie Bullaugen oder Garagentoren durch den Materialauftrag oder -abtrag beeinträchtigt werden. Ein weiteres Problem besteht darin, dass die Bereitstellung des Analysewerkzeuges, des Auftragswerkzeuges und des Abtragswerkzeuges an einem Roboterarm zwar eine für die Bearbeitungsgenauigkeit wichtige Voraussetzung dieses vorbekannten Systems ist, bei großen Schiffsrümpfen aber zu einer unzureichenden Bearbeitungsgeschwindigkeit führt. Die Bearbeitungsschritte der Oberflächenanalyse, des Auftrags und des Abtrags des Materials müssen im Stand der Technik aufeinanderfolgend durch einen Roboter ausgeführt werden, was gerade bei großflächigen Bearbeitungen zu Verzögerungen führt, die nicht wirtschaftlich sind. Es besteht daher ein Bedarf für eine automatisierte Bearbeitung, die eine schnellere Fertigstellung auch bei großen Schiffsrümpfen ermöglicht.

Der Auftrag des Füller- beziehungsweise Spachtelmaterials erfolgt bei bekannten Schleifvorgängen jedoch regelmäßig solcher Art, dass ein großer Bearbeitungszuschlag aufgetragen wird. Dies liegt darin begründet, dass ein zu sparsamer Auftrag des Spachtel- beziehungsweise Füllmaterials dazu führen kann, dass beim nachfolgenden Schleifvorgang Vertiefungen beziehungsweise konkave Rumpfwandabschnitte verbleiben, die einer nachträglichen Auffüllung mit Füller-/Spachtelmaterial erforderlich machen. Aufgrund der damit verbundenen Wiederholung von Arbeitsschritten, Einhaltung von Trocknungszeiten ist ein solcher wiederholter Auftrag und Schleifvorgang für eine wirtschaftlich effiziente Schleifbearbeitung von Schiffsrümpfen nachteilig.

Der großzügige Auftrag eines Überschusses an Füller-/Spachtelmaterial zieht jedoch andere Nachteile mit sich. So wird hierdurch zum Einen eine erhebliche Staubbelastung bewirkt, weil große Volumenmengen an Spachtel- und Füllermaterial im Zuge der Schleifbearbeitung vom Schiffsrumpf abgetragen werden müssen. Zum Anderen wirkt sich der hohe Verbrauch an Spachtel- und Füllmaterial nachteilig auf die Kosteneffizienz der Schiffsrumpfbearbeitung aus, weil sowohl die Materialkosten des Füller- beziehungsweise Spachtelmaterial steigen als auch möglicherweise eine Auftragsweise in zwei oder mehr Schichten erforderlich ist und schließlich ein zeitintensiver Schleifvorgang notwendig wird. Es ist ein Bestreben dieser Erfindung, eine Schleifbearbeitung von Schiffsrümpfen zu ermöglichen, welche diese Nachteile vermeidet.

Schließlich ist es sowohl bei der Neuherstellung als auch bei der Schleifbearbeitung von Schiffsrümpfen im Zuge eines Wartungsvorgangs ein generelles Bestreben, die Bearbeitungszeit für den gesamten Bearbeitungsvorgang zu minimieren, um eine möglichst geringe Ausfallzeit des Schiffes zu erreichen. Es ist ein weiteres Bestreben dieser Erfindung, eine Schiffsrumpfbearbeitung zu ermöglichen, bei der eine möglichst geringe Ausfallzeit des Schiffsrumpfes erreicht wird.

Diese Probleme werden erfindungsgemäß mit einem Schleifroboter der eingangs genannten Bauweise gelöst, indem eine elektronische Steuerungseinheit bereitgestellt wird, welche signaltechnisch mit der Aktuatoreinrichtung verbunden ist zur Steuerung der Bewegung des Schleifkopfs entlang der zumindest zwei Richtungen, die Steuerungseinheit umfassend: eine Eingangsschnittstelle zum Einlesen von Scandaten des Schiffsrumpfes, welche die Oberflächengeometrie des Schiffsrumpfes beschreiben, ein Filterungsmodul, das ausgebildet ist zur Entfernung von Scandaten, die außerhalb des Schiffsrumpfes liegen, ein Planungsmodul, welches signaltechnisch mit dem Filterungsmodul gekoppelt und ausgebildet ist, um aus den gefilterten Scandaten eine den Schiffsrumpf umhüllende Soll-Oberfläche anhand von Soll-Oberflächendaten zu definieren, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist, ein Arbeitsvorbereitungsmodul, welches signaltechnisch mit dem Planungsmodul gekoppelt und ausgebildet ist, um aus den Soll-Oberflächendaten eine Mehrzahl von Arbeitsflächendatensätzen zu erstellen, wobei jeder Arbeitsflächendatensatz eine Fläche definiert, die kleiner oder gleich dem Bearbeitungszeitraum ist, und ein Steuerungsmodul, welches signaltechnisch mit dem Arbeitsvorbereitungsmodul gekoppelt und ausgebildet ist, um aus jedem Arbeitsflächendatensatz einen Steuerungsdatensatz für die Aktuatoreinrichtung zu erstellen, und eine Ausgangsschnittstelle zum Ausgeben der Steuerungsdatensätze an die Aktuatoreinrichtung.

Mit dem erfindungsgemäßen Schleifroboter wird es ermöglicht, einen Schleifvorgang eines Schiffsrumpfes in voll- oder teilautomatisierter Vorgehensweise effizient auszuführen. Hierdurch kann einerseits erheblich Zeit bei der Schleifbearbeitung inklusive der hierfür erforderlichen Arbeitsvorbereitung eingespart werden, andererseits der Schleifvorgang selbst in wirtschaftlich effizienter Weise und unter minimiertem Einsatz von Arbeitsmitteln wie Schleifkörpern, Spachtel- und Füllermaterial durchgeführt werden.

Erfindungsgemäß wird dies hierdurch erreicht, dass ein Schleifkopf verwendet wird, der durch seine Montage an einem Schleifroboter solcher Art relativ zu einem Rahmengestell bewegbar ist, dass er die Schleifbewegung entlang des Schiffsrumpfes durch Ansteuerung von Aktuatoren vollautomatisiert ausführen kann. Das Rahmengestell selbst kann hierbei beispielsweise auf einer Bühne montiert sein, die an einer Position am Schiffsrumpf auf einer passenden Höhe positioniert werden kann, wobei diese Positionierung der Bühne wiederum durch Bühnenaktuatoren erfolgen kann.

Die Bewegung des Schleifroboters zur Führung des Schleifkopfes entlang des Schiffsrumpfes erfolgt hierbei mittels Steuerungsdaten, die vor Beginn des Schleifvorgangs durch eine elektronische Steuerungseinheit berechnet werden. Die Steuerungseinheit kann integraler Bestandteil der Schleifrobotersteuerung sein. Ebenso kann die Steuerungseinheit aber durch eine separate elektronische Berechnungseinrichtung dargestellt werden, die entsprechende Daten erzeugt, die über Schnittstellen an die Steuerung des Schleifroboters übertragen werden. So ist es beispielsweise möglich, die Steuerungseinheit in einem Rechenzentrum zu platzieren, die Berechnung der Steuerungsdaten dort durchzuführen, auf einem Speichermedium zwischen zu speichern und das Speichermedium zum Schleifroboter zu transportieren und dort einzulesen oder den Schleifroboter über eine Datenverbindungsstrecke mit den Steuerungsdaten aus diesem Rechenzentrum zu versorgen.

Die Steuerungseinheit umfasst eine Eingangsschnittstelle, beispielsweise kann diese durch ein Lesegerät für Speichermedien oder eine serielle oder parallele Datenschnittstelle zum Anschluss einer Datenleitung, ebenso gut aber auch durch eine drahtlose Datenübertragungsschnittstelle bereitgestellt sein. Über die Eingangsschnittstelle können in die Steuerungseinheit Scandaten eingelesen werden, welche die Oberflächengeometrie des Schiffsrumpfes beschreiben.

Diese Scandaten werden regelmäßig durch eine Abtastung des Schiffsrumpfes in einem Scanvorgang gewonnen. Diese Abtastung kann durch mechanische Abtastelemente erfolgen, bevorzugt werden aber hierzu Messgeräte bevorzugt, die mittels einer kontaktlosen Abtastung mit Strahlung im sichtbaren oder unsichtbaren Wellenlängenbereich arbeiten, beispielsweise mittels Laserstrahlabtastung des Schiffsrumpfes. Die so erhaltenen Scandaten können insbesondere bei dieser Abtastweise besonders effizient und schnell auch bei großen Schiffsrümpfen gewonnen werden, weisen aber dann und allgemein typischerweise eine Reihe von Artefakten auf.

Diese Artefakte liegen einerseits darin, dass durch Fehlabtastungen (bei optischer Abtastung beispielsweise durch Reflektionen an Staubpartikeln in der Luft oder Erfassung von Gegenständen aus der Umgebung des Schiffsrumpfes), Scandaten im Scandatensatz erhalten sind, die nicht zum Schiffsrumpf gehörig sind, andererseits sind im Scandatensatz auch Bereiche des Schiffsrumpfes beschrieben, die nicht durch den Schleifvorgang bearbeitet werden sollen, wie die zuvor beschriebenen Ein- und Aufbauten am Schiffsrumpf oder Fensterflächen, Rahmenflächen und der Gleichen. Die Steuerungseinheit umfasst zu diesem Zweck ein Filterungsmodul, welches solche Scandaten, die als Artefakt in dem Scandatensatz enthalten sind und außerhalb des Schiffsrumpfes liegen, in einer automatischen Bearbeitung der Scandaten entfernt. Diese Entfernung kann insbesondere erfolgen, indem aus dem gesamten Scandatensatz durch Bildung einer Oberfläche die Schiffsrumpfoberfläche in einer Vektor- oder Parameterbeschreibung beschrieben wird, wobei eine Optimierung der flächenbeschreibenden Parameter beziehungsweise Vektoren danach stattfindet, dass eine maximale Anzahl der Scandatenpunkte in dieser so definierten Oberfläche nach der Vektorgrafik enthalten sind, um danach solche Scandatenpunkte aus dem Scandatensatz zu löschen, die mehr als eine vorbestimmte Toleranzdistanz von dieser definierten Oberfläche entfernt liegen. Je nach Beschaffenheit des Schiffsrumpfes kann hierauf folgend oder zuvor noch eine automatisierte oder manuelle Erkennung von Flächenabschnitten erfolgen, an denen keine Schleifbearbeitung durchgeführt werden soll, um auch diese Scandaten aus dem Scandatensatz zu entfernen.

Erfindungsgemäß wird es hierdurch ermöglicht, die Scanvorrichtung getrennt von dem Schleifroboter bereitzustellen, sodass weder eine Umrüstung des Schleifroboters für den Scanvorgang notwendig ist noch der Scanvorgang zeitlich dem Schleifvorgang folgen muss. Dadurch wird die simultane Bearbeitung des Schiffsrumpfes mit einem oder mehreren Schleifrobotern ermöglicht und auch ein Scannen eines Anteils des Schiffsrumpfes ermöglicht, während ein anderer Anteil des Schiffsrumpfes bearbeitet wird.

Aus den so erzeugten, gefilterten Scandaten wird dann in einem Planungsmodul, dass ebenfalls Bestandteil der Steuerungseinheit ist, ein Datensatz erstellt, der eine Soll-Oberfläche des Schiffsrumpfes definiert. Diese Soll-Oberfläche wird in einem automatisierten Datenverarbeitungsprozess erzeugt und folgt hierbei vorzugsweise folgenden Randbedingungen:
- Die Soll-Oberfläche muss eine Umhüllende des Schiffsrumpfes sein, dass heißt die Soll-Oberfläche muss insgesamt außerhalb des Schiffsrumpfes liegen. Diese Randbedingung schließt insgesamt aus, dass durch die spätere Schleifbearbeitung der Solloberfläche zu bearbeitende Anteile des (metallischen) Schiffsrumpfes die Soll-Oberfläche durchdringen, folglich also bei einer Schleifbearbeitung durch den Schleifroboter auf der Soll-Oberfläche in Kontakt mit dem Schleifkopf kommen würden.
- Die Soll-Oberfläche folgt hierbei einer Vektorgrafik, die eine flache oder gekrümmte Oberfläche beschreibt, um hierdurch einen hydrodynamisch günstigen Verlauf des Schiffsrumpfes zu erzielen.
- Die Soll-Oberfläche wird durch das Planungsmodul solcher Art festgelegt, dass überall ein möglichst geringer Abstand zu der Rumpfoberfläche, die durch die Scandaten definiert wird, erreicht wird, um hierdurch das über die gesamte Fläche integrierte Volumen an aufzutragender Spachtelmasse zu minimieren. Die so erstellten Soll-Oberflächendaten definieren theoretisch die Oberfläche, welche nach Durchführung des Schleifprozesses am Schiffsrumpf realisiert sein soll und dienen daher in zweierlei Hinsicht für den Bearbeitungsvorgang des Schiffsrumpfes. Zum Einen sind sie die Grundlage für die Steuerungsdaten, mit denen der Schleifkopf mittels des Schleifroboters bewegt wird. Zum Anderen dienen sie als Grundlage dafür, die Menge und Schichtdicke des Spachtel-/Füllmaterials zu ermitteln und beim Auftrag entsprechend zu realisieren, wobei ein entsprechender minimaler Bearbeitungszuschlag über diese Soll-Oberfläche hinaus aufgetragen werden muss.

Die so erzeugten Soll-Oberflächendaten werden in einem ebenfalls in der Steuerungseinheit enthaltenen Arbeitsvorbereitungsmodul zu Arbeitsflächendatensätzen verarbeitet. Dieser Verarbeitungsschritt resultiert aus der Problematik, dass ein Schleifroboter, der in der Lage ist, den Schleifkopf mit ausreichender Präzision zu führen, regelmäßig keinen ausreichenden Verfahrweg hat, um einen Schiffsrumpf insgesamt in einem Arbeitsgang zu bearbeiten. Es ist daher notwendig, die Position des gesamten Schleifroboters im Zuge der Schleifbearbeitung des Schiffsrumpfes zumindest einmal, in der Regel mehrmals zu verändern und von einer Position aus jeweils nur einen Flächenabschnitt des Schiffsrumpfes zu bearbeiten. Um diese Bearbeitungsweise effizient durchführen zu können und zugleich in der Arbeitsvorbereitung effizient die Steuerungsdaten für den Schiffsroboter erstellen zu können, hat sich erfindungsgemäß eine Erzeugung von mehreren Arbeitsflächendatensätzen als vorteilhaft erwiesen, wobei jeweils ein Arbeitsflächendatensatz als Ausgangslage für eine Schleifbearbeitung mittels des Schleifroboters von einer Position des Schleifroboters dient, also ohne Bewegung des Rahmengestells, auf dem der Schleifroboter montiert ist, selbst auskommt. Die so erstellten Arbeitsflächendatensätze berücksichtigen hierbei die Eigenschaften des Schleifroboters, insbesondere den durch den Schleifroboter realisierbaren Verfahrbereich für den Schleifkopf, also den Arbeitsraum, der durch den Schleifroboter bereitgestellt wird. Die Berücksichtigung dieser Schleifroboter-Maschineneigenschaften führt regelmäßig dazu, dass die Arbeitsflächendatensätze sich auch hinsichtlich ihres am Schiffsrumpf überstrichenen Flächenbereichs unterscheiden, also der Flächenbereich beispielsweise im Bereich stark gekrümmter Flächen kleiner ausfällt als in einem Bereich mit im Wesentlichen ebenen Schiffsrumpf. Durch die Bereitstellung mehrerer Arbeitsflächendatensätze kann einerseits eine simultane Bearbeitung großer Schiffsrümpfe durch mehrere Schleifroboter erfolgen, andererseits können Ein- bzw. Anbauten wie Scheuerleisten einer separaten Bearbeitung mit einem eigenen Arbeitsflächendatensatz unterzogen werden und hierdurch deren Oberfläche als stetige und kontinuierliche Fläche bearbeitet, geglättet und an die Rumpfoberfläche mit einem unstetigen oder diskontinuierlichen Übergang angeglichen werden.

Hieraus folgend wird dann schließlich in einem Steuerungsmodul, das in der Steuerungseinheit enthalten ist, aus jedem Arbeitsflächendatensatz ein Steuerungsdatensatz erstellt, welcher in einer für den Schleifroboter interpretierbaren Datenstruktur die Arbeitswege des Schleifkopfes für die Bearbeitung der jeweiligen Arbeitsfläche definiert. Die Anzahl der Steuerungsdatensätze entspricht dabei der Anzahl der Arbeitsflächendatensätze. Die Steuerungsdatensätze können hierbei für sich genommen und isoliert an den Schleifroboter übermittelbare Datenpakte darstellen oder es können mehrere Steuerungsdatensätze zu einem integralen Steuerungsdatensatz für den gesamten Schiffsrumpf oder für mehrere Arbeitsflächen an dem Schiffsrumpf zusammengefasst werden.

Die so erstellten Steuerungsdatensätze werden dann einzeln oder in Paketform aus der Steuerungseinheit ausgegeben, wobei diese Ausgabe an entsprechende Aktuatoren des Schleifroboters erfolgen kann, wenn die Steuerungseinheit integraler Bestandteil des Schleifroboters ist oder diese Ausgabe an einen Datenspeicher oder eine Datenleitung in drahtloser oder drahtgebundener Form erfolgen kann, um die Steuerungsdaten an eine Steuerung des Schleifroboters zu übertragen.

Der erfindungsgemäße Schleifroboter, das erfindungsgemäße Schleifverfahren und die von der Erfindung ebenfalls erfassten Vorrichtungen zur Oberflächenbearbeitung, insbesondere zur Spachtelung von Oberflächen sowie die entsprechenden Bearbeitungsverfahren, insbesondere Spachtelverfahren, richten sich bevorzugt auf die Bearbeitung von Schiffsrümpfen. Erfindungsgemäß können diese Vorrichtungen und Verfahren aber auch zur Bearbeitung anderer Oberflächen, allgemein technischer Oberflächen eingesetzt werden, da der Erfinder erkannt hat, dass die für Schiffsrümpfe zuvor erläuterte Problemstellung auch bei der Bearbeitung anderer technischer Oberflächen auftreten kann, auch wenn diese nicht die typischen Eigenschaften von Schiffsrümpfen mit ihren gewölbten Flächenabschnitten und der Anforderung an einen hydrodynamisch günstigen Oberflächenverlauf aufweisen. So kann der erfindungsgemäße Schleifroboter, das erfindungsgemäße Schleifverfahren und die von der Erfindung ebenfalls erfassten Vorrichtungen zur Oberflächenbearbeitung, insbesondere zur Spachtelung von Oberflächen sowie die entsprechenden Bearbeitungsverfahren, insbesondere Spachtelverfahren, zum Beispiel eingesetzt werden zur Bearbeitung von Flugzeugrumpfoberflächen, Oberflächen an gleisgebundenen Fahrzeugen wie Waggons und Triebfahrzeugen oder Triebzügen, Straßenfahrzeugen wie Reisebussen, Lastkraftwagen wie Tanklastwagen. Ebenso kann das erfindungsgemäße Bearbeitungsverfahren und die Bearbeitungsvorrichtungen zum Bearbeiten, insbesondere zum Schleifen oder Spachteln von stationären Einrichtungen eingesetzt werden. Hier kann zum Beispiel die Bearbeitung von Oberflächen von Speichertanks, Gebäuden, Maschinengehäusen oder Möbeln vorgesehen sein.

Gemäß einer ersten bevorzugten Ausführungsform ist vorgesehen, dass das Filterungsmodul ausgebildet ist, um aus den Scandaten eine ebene oder eine in einer stetigen Krümmung verlaufende Referenzoberfläche zu bilden, in der eine Mehrzahl der Scandatenpunkte liegt, und um Scandatenpunkte, welche außerhalb eines vorbestimmten Toleranzabstands zu der Referenzoberfläche liegen, aus den Scandaten zu entfernen. Mit diesem Mechanismus kann in einer automatisierten Weise durch eine elektronische Rechnereinheit eine Filterung von Scandaten erfolgen, bei der Artefakte aus der Scandatenerfassung entfernt werden. Diese Eigenschaft des Filterungsmoduls macht sich zunutze, dass ein Schiffsrumpf in ebene und stetig gekrümmte Flächen unterteilbar ist, sodass regelmäßig entsprechende Abschnitte aus den Scandaten gebildet werden und im Wege eines "Best-Fit-Algorithmus" eine Referenzebene ermittelt werden kann, in der eine maximale Anzahl der Scandatenpunkte liegt. Dieser Maximierungsprozess führt regelmäßig dazu, dass die Referenzoberfläche mit der tatsächlichen Ist-Oberfläche übereinstimmt. Dabei kann die Referenzoberfläche durch lineare Gleichungen beschrieben werden oder auch durch Gleichungen höherer Ordnung. In Bezug auf die so definierte Referenzoberfläche kann dann ein Toleranzabstand bestimmt werden, innerhalb dem noch davon ausgegangen wird, dass ein Scandatenpunkt zur Oberfläche gehört. Außerhalb dieses Toleranzabstands liegende Scandatenpunkte, die also einen bestimmten Abstand zur Referenzoberfläche überschreiten, werden aus den Scandaten gelöscht. Das Ergebnis dieses Filterungsvorgangs ist eine Beschreibung der Ist-Oberfläche des Schiffsrumpfes, die artefaktfrei nur solche Punkte wiedergibt, die tatsächlich in der Schiffsrumpfoberfläche liegen.

Erfindungsgemäß ist es vorgesehen, dass das Planungsmodul ausgebildet ist, um ein Volumen zu berechnen, welches durch die Soll-Oberfläche und die Oberflächengeometrie des Schiffsrumpfes begrenzt wird und das Volumen durch virtuelle Verschiebung der Soll-Oberfläche minimiert wird. Die durch den Schleifroboter erfolgende Bearbeitung beruht darauf, dass auf der Ist-Oberfläche eine Spachtelmasse aufgetragen wird und diese dann durch den Schleifroboter solcher Art beschliffen wird, dass eine glatte und hydrodynamisch günstige Oberfläche entsteht. Die hierbei aufgetragene Spachtelmasse ist nach Möglichkeit insoweit zu minimieren, um einerseits den Verbrauch an Spachtelmasse zu verringern, andererseits den Schleifaufwand klein zu halten. Das derart ausgebildete Planungsmodul ermöglicht es, in einem automatisierten Berechnungsvorgang eine Minimierung der Spachtelmasse vorzunehmen. Hierzu wird eine Soll-Oberfläche definiert, welche durch die letztlich geschliffene Spachteloberfläche gebildet wird und diese Soll-Oberfläche solcher Art zu der Ist-Oberfläche des Schiffsrumpfs positioniert, dass zwischen Soll-Oberfläche und Ist-Oberfläche ein minimales Volumen entsteht.

Es kann weiterhin besonders bevorzugt vorgesehen sein, dass das Planungsmodul ausgebildet ist, um die Soll-Oberfläche in einem automatisierten Planungsvorgang zu definieren, indem auf der Soll-Oberfläche stehende Normalvektoren gebildet werden und die Soll-Oberfläche so geformt ist, dass alle Normalvektoren von einem durch den Schiffsrumpf begrenzten Schiffsinnenraum wegweisen und eine zweite mathematische Ableitung der Soll-Oberfläche gebildet wird, welche ein Maß für die Krümmung der Soll-Oberfläche darstellt, und die Soll-Oberfläche so geformt ist, dass die zweite mathematische Ableitung der Soll-Oberfläche an jeder Stelle der Soll-Oberfläche und in jeder Richtung entlang der Soll-Oberfläche einen vorbestimmten maximalen Krümmungswert unterschreitet.

Durch die Definition der Soll-Oberfläche mit den beiden so definierten Randbedingungen wird sichergestellt, dass die Soll-Oberfläche eine richtige Orientierung aufweist und einen gleichmäßigen, nicht zu starken Krümmungsverlauf hat. Der Krümmungsverlauf wird dabei durch den vorbestimmten maximalen Krümmungswert definiert, welcher anhand der zweiten mathematischen Ableitung einen minimalen Krümmungsradius der Soll-Oberfläche darstellt. Es ist zu verstehen, dass der maximale Krümmungswert bzw. der minimale Krümmungsradius für ein Schiff insgesamt oder für Rumpfabschnitte eines Schiffes definiert werden kann, um den unterschiedlichen Anforderungen an die Schiffsrumpfabschnitte über die Länge und Höhe des Schiffsrumpfes mit diesem Planungsvorgang gerecht zu werden.

Noch weiter ist es bevorzugt, wenn das Planungsmodul ausgebildet ist, um das Volumen zu minimieren, indem die Soll-Oberfläche als Umhüllungsfläche der Ist-Oberfläche gebildet wird, und die Soll-Oberfläche in einem vorbestimmten Minimalabstand zu der am weitesten vorstehenden Erhebung der Ist-Oberfläche gelegt wird, und/oder die Soll-Oberfläche bündig zu der am weitesten vorstehenden Erhebung der Ist-Oberfläche gelegt wird. Unter einer Umhüllungsfläche ist hierbei eine Fläche zu verstehen, die vollständig oder zumindest im Wesentlichen außerhalb der durch die Ist-Oberfläche definierten Fläche liegt, also in Bezug auf die Schiffsrumpfoberfläche gegenüberliegend zum Schiffsinnenraum angeordnet ist. Dabei kann die als Umhüllungsfläche ausgebildete Soll-Oberfläche solcher Art angeordnet sein, dass sie gegenüber jeder Stelle der Ist-Oberfläche einen vorbestimmten Minimalabstand einhält, sodass überall auf dem Schiffsrumpf die Spachtelmasse zumindest in einer solchen Mindestdicke aufgetragen ist, die diesem Minimalabstand entspricht. In einer anderen Ausgestaltung kann die Soll-Oberfläche auch bündig zu der am weitesten vorstehenden Erhebung der Ist-Oberfläche gelegt sein. Bei dieser Optimierung wird diejenige Erhebung, welche am weitesten aus der ansonsten im Wesentlichen ebenen Fläche des Schiffsrumpfs nach außen hervorsteht, als Anlagepunkt für die Soll-Oberfläche genommen, sodass mit Ausnahme dieser Erhebung überall ein Spachtelauftrag erfolgt und nach dem Beschleifen auf die Geometrie der Soll-Oberfläche auch ein Spachtelauftrag verbleibt. Mit dieser Ausgestaltung kann eine höchsten Anforderungen genügende geschliffene Oberfläche des Schiffsrumpfs erzielt werden, ohne dass hierfür eine große Menge an Spachtelmasse erforderlich ist.

Gemäß einer hierzu variablen Ausgestaltung kann weiter vorgesehen sein, dass das Planungsmodul ausgebildet ist, um das Volumen zu minimieren, indem die Soll-Oberfläche als eine die Ist-Oberfläche an zumindest einer Schnittposition schneidende Umhüllungsfläche der Ist-Oberfläche gebildet wird, und die Soll-Oberfläche so weit in Richtung der Ist-Oberfläche verschoben wird, dass der Abstand zwischen der Ist-Oberfläche und der Soll-Oberfläche an jeder Schnittposition einen vorbestimmten Maximalabstand unterschreitet, und/oder die Soll-Oberfläche so weit in Richtung der Ist-Oberfläche verschoben wird, dass die Anzahl der Schnittpositionen eine vorbestimmte Maximalanzahl unterschreitet. Bei dieser Ausgestaltung wird die Soll-Oberfläche solcher Art angeordnet, dass einige wenige Bereiche der Ist-Oberfläche sich mit der Soll-Oberfläche schneiden bzw. diese durchbringen. Dabei wird das Maß, um welches die Ist-Oberfläche die Soll-Oberfläche durchdringt, durch die Definition und Einhaltung eines vorbestimmten Maximalabstands solcher durchschneidender Flächenanteile limitiert. Alternativ oder zusätzlich zu dieser Randbedingung kann auch die Anzahl der Durchdringungsbereiche der Ist-Oberfläche durch die Soll-Oberfläche begrenzt werden. Mit diesen Randbedingungen wird erreicht, dass die Soll-Oberfläche im Wesentlichen als Umhüllende der Ist-Oberfläche ausgebildet ist, also außerhalb des Schiffsrumpfs in Bezug auf den Schiffsinnenraum angeordnet ist. Der vorbestimmte Maximalabstand kann hierbei beispielsweise ein, zwei oder mehr Millimeter betragen. Die vorbestimmte Maximalanzahl der Schnittpositionen kann hierbei beispielsweise eine Schnittposition, zwei, drei, fünf, zehn oder mehr Schnittpositionen tragen.

Mit dieser Fortbildung des Planungsmoduls wird insbesondere dann, wenn die Ist-Oberfläche durch nur einige wenige Erhebungen oder Vorsprünge nach außen vorsteht, eine wirksame Reduzierung der Spachtelmasse und des Schleifaufwands erreicht, indem die umhüllende Soll-Oberfläche nicht durch diese einzelnen Vorsprünge in ihrer Lage definiert wird. Stattdessen wird bei dieser Vorgehensweise akzeptiert, dass einige Flächenabschnitte der Ist-Oberläche durch die Soll-Oberfläche hinausragen und folglich auch eine spezifische Behandlung bei der Bearbeitung erfordern.

Diese spezifische Behandlung kann einerseits darin bestehen, das Vorstehen dieser Flächenabschnitte zu tolerieren, also eine insoweit bestehende Unregelmäßigkeit der nach den Schleifen vorliegenden Oberfläche zu akzeptieren und die vorspringenden Abschnitte der Ist-Oberfläche keiner Schleifbearbeitung zuzuführen. Die Sonderbehandlung kann auch darin liegen, die vorspringenden Abschnitte der Ist-Oberfläche durch eine Schleifbehandlung zu bearbeiten und auf ein solches Maß herunterzuschleifen, dass sie in der Soll-Oberfläche liegen. Schließlich kann die Sonderbehandlung auch darin liegen, dass diese Abschnitte der Ist-Oberfläche durch eine Verformung einwärts gedrückt werden und auf diese Weise die Ist-Oberfläche verändert wird, um ein Vorspringen über die Soll-Oberfläche nach außen zu vermeiden.

Gemäß einer weiteren bevorzugten Ausführungsform ist vorgesehen, dass das Rahmengestell mit einer mittels Bühnenaktuatoren verfahrbaren Bühne verbunden ist und das Steuerungsmodul Steuerungsdaten zur Ansteuerung der Bühnenaktuatoren erstellt, mittels derer die Bühne nach Abarbeitung eines ersten Steuerungsdatensatzes zu einer Position für eine Abarbeitung eines zweiten Steuerungsdatensatzes verfahrbar ist. Bei dieser Fortbildung wird neben den eigentlichen, für den Schleifroboter dienenden Steuerungsdaten zur Bewegung des Schleifkopfes selbst entlang des Schiffsrumpfs auch Bühnensteuerungsdaten bereitgestellt, die eine verfahrbare Bühne ansteuern. Die Arbeitsweise des Schleifroboters ist hierbei so, dass die Bühne in eine vorbestimmte erste Position gefahren wird, von der aus ein erster Steuerungsdatensatz abgearbeitet wird, der den Schleifkopf entlang einem entsprechend berechneten Abschnitt der Soll-Oberfläche entlang führt und die Soll-Oberfläche mittels Beschleifen herstellt. Nach Abarbeitung dieses ersten Steuerungsdatensatzes wird die Bühne mittels der Bühnensteuerungsdaten in eine zweite Position geführt und der Schleifroboter ausgehend von dieser zweiten Position wiederum mittels eines zweiten Steuerungsdatensatzes so bewegt, dass der Schleifkopf entlang einem zweiten Abschnitt der Soll-Oberfläche geführt wird. Der zweite Abschnitt kann dabei bevorzugt benachbart zum ersten Abschnitt sein und die Steuerungsdaten für die Bühne und den Schleifroboter solcherart berechnet sein, dass ein kontinuierlicher Übergang zwischen dem ersten und zweiten Abschnitt hergestellt wird. Hierauf folgend kann die Bühne wiederum mittels entsprechender Bühnensteuerungsdaten an eine weitere Position verfahren werden, um dort einen dritten Steuerungsdatensatz abzuarbeiten und so weiter.

Generell ist zu verstehen, dass der Schiffsrumpf virtuell in mehrere Flächenabschnitte, die durch jeweilige Steuerungsdatensätze bearbeitet werden, unterteilt wird. Maßgeblich hierfür kann sein, dass innerhalb jedes solchen Flächenabschnitts eine geometrisch stetige Oberfläche vorliegt, so dass Unstetigkeitsstellen oder Unstetigkeitslinien in der Geometrie des Schiffsrumpfs vorzugsweise die Grenze eines Flächenabschnitts darstellen, der mittels eines einzigen Steuerungsdatensatzes bearbeitet wird. Diese Unterteilung und Vorgehensweise kann allen Ausführungsformen der Erfindung zugrunde liegen, um größere Schiffsrümpfe mit unterschiedlichen Flächenabschnitten und Unstetigkeitsstellen einer sauberen Schleifbearbeitung unterziehen zu können.

Der Schleifroboter kann weiter fortgebildet werden durch ein Hilfsprofilmodul, welches ausgebildet ist, um aus den gefilterten Scandaten und den Soll-Oberflächendaten Profildaten eines Hilfsrahmenprofils zu erzeugen, wobei die Profildaten eine Geometrie eines Hilfsrahmens beschreiben, der auf einer ersten Längsseite der Kontur des Schiffsrumpfes entlang einer geraden oder gekrümmten, vorbestimmten Hilfslinie entspricht und auf einer hierzu gegenüberliegenden zweiten Längsseite der Kontur der Soll-Oberfläche entlang dieser Hilfslinie entspricht. Der Verlauf der Dicke des Hilfsrahmenprofils entspricht daher dem Verlauf der Dicke der Spachtelschicht entlang der vorbestimmten Hilfslinie. Mit diesem Hilfsprofilmodul werden bestimmte längliche Hilfskonturen in Gestalt eines Hilfsrahmens berechnet und können dann physisch vorgefertigt werden. Diese Hilfsprofile können vor dem Auftragen der Spachtelmasse auf die Ist-Oberfläche, also unmittelbar auf den Schiffsrumpf, aufgebracht werden, beispielsweise auf diesem aufgeklebt werden. Sie stellen dann eine physische Konturlinie der angestrebten Soll-Oberfläche dar und dienen sowohl als Schablone wie auch als Kontrollmaß für den Auftrag der Spachtelmasse und den nachfolgenden Schleifvorgang. Weiterhin kann der Schleifroboter anhand dieses Hilfsrahmenprofils in seiner Positionierung überprüft oder eingelernt werden, beispielsweise indem der Schleifkopf an zwei oder drei Punkte des Hilfsrahmenprofils geführt wird und somit eine Referenzierung der Positionierung des Schleifroboters in Bezug auf die Soll-Oberfläche erfolgt.

Ein weiterer Aspekt der Erfindung ist ein Verfahren zum Schleifen eines Schiffsrumpfes, indem ein mit einem Schleifmittel ausgerüsteter Schleifkopf entlang des Schiffsrumpfes mittels einer Aktuatoreinrichtung, die den Schleifkopf mit einem Rahmengestell verbindet, in mindestens zwei zueinander senkrechten Richtungen relativ zu dem Rahmengestell innerhalb eines Bearbeitungsraumes bewegt wird, und ein Verfahren zum Auftragen eines Materials auf einen Schiffsrumpf, indem ein mit einer Materialauftragseinheit ausgerüsteter Materialauftragskopf entlang des Schiffsrumpfes mittels einer Aktuatoreinrichtung, die den Materialauftragskopf mit einem Rahmengestell verbindet, in mindestens zwei zueinander senkrechten Richtungen relativ zu dem Rahmengestell innerhalb eines Bearbeitungsraumes bewegt wird. Diese Verfahren sind charakterisiert durch die Schritte Scannen des Schiffsrumpfes mittels einer Erfassungseinrichtung zur Erzeugung eines digitalen Scandatensatzes, welche die Oberflächengeometrie des Schiffsrumpfes definieren, Filtern des Scandatensatzes zur Entfernung von solchen Scandaten, die außerhalb des Schiffsrumpfes liegen, in einem elektronischen, automatisierten Filterungsschritt, zur Erzeugung eines Filterscandatensatzes, Erzeugen eines den Schiffsrumpf umhüllende Soll-Oberfläche definierenden Soll-Oberflächendatensatzes aus den Filterscandatensatzes in einem elektronisch automatisierten Planungsschritt, wobei die Soll-Oberfläche durch eine Aufteilung der gefilterten Scandaten in mehrere Flächendatensätze solcherart definiert ist, dass jeder Flächendatensatz eine Fläche definiert, die frei von Diskontinuitäten ist, Erzeugen eines ersten Arbeitsflächendatensatzes und weiterer Arbeitsflächendatensätzen aus dem Soll-Oberflächendatensatz, wobei jeder Arbeitsflächendatensatz eine Fläche definiert, die kleiner oder gleich dem Bearbeitungsraum ist, Erzeugen eines ersten Steuerungsdatensatzes und weiterer Steuerungsdatensätze aus den Arbeitsflächendatensätzen, Bewegen des Rahmengestells an eine erste Ausgangsposition und Steuern der Aktuatoreinrichtung mittels des ersten Steuerungsdatensatzes, und Bewegen des Rahmengestells an eine weitere Ausgangsposition und Steuern der Aktuatoreinrichtung mittels des weiteren Steuerungsdatensatzes. Dieses Verfahren ermöglicht eine effiziente Schleifbearbeitung eines Schiffsrumpfes in einer weitestgehend automatisierten Arbeitsweise und eine Erzielung eine gegenüber dem Stand der Technik verbesserten Oberflächengüte und Oberflächengleichmäßigkeit. Hinsichtlich der in diesem Schleifverfahren abgearbeiteten Schritte wird auf die hierzu korrespondierende Ausgestaltung der einzelenden Module des Schleifroboters Bezug genommen, die zuvor stehend ausführlich erläutert wurden.

Das Verfahren kann dadurch fortgebildet werden dass, in dem Filterungsschritt aus dem Scandatensatz eine ebene oder eine in einer stetigen Krümmung verlaufende Referenzoberfläche gebildet wird, in der eine Mehrzahl der durch die Scandaten des Scandatensatzes definierte Punkte liegt, und Entfernen solcher Scandaten, welche Punkte definieren, die außerhalb eines vorbestimmten Toleranzabstands zu der Referenzoberfläche liegen, aus den Scandaten.

Das erfindungsgemäße Verfahren sieht vor, dass in dem Planungsschritt ein Volumen berechnet wird, welches durch die Soll-Oberfläche und die Oberflächengeometrie des Schiffsrumpfes begrenzt wird und das Volumen durch virtuelle Verschiebung der Soll-Oberfläche minimiert wird.

Das Verfahren kann dadurch fortgebildet werden, dass in dem Planungsschritt die Soll-Oberfläche in einem automatisierten Planungsvorgang definiert wird, indem auf der Soll-Oberfläche stehende Normalvektoren gebildet werden und die Soll-Oberfläche so geformt wird, dass alle Normalvektoren von einem durch den Schiffsrumpf begrenzten Schiffsinnenraum wegweisen und eine zweite mathematische Ableitung der Soll-Oberfläche gebildet wird und die Soll-Oberfläche so geformt wird, dass die zweite mathematische Ableitung der Soll-Oberfläche an jeder Stelle der Soll-Oberfläche und in jeder Richtung entlang der Soll-Oberfläche einen vorbestimmten maximalen Krümmungswert unterschreitet.

Das Verfahren kann dadurch fortgebildet werden, dass das Volumen minimiert wird, indem die Soll-Oberfläche als Umhüllungsfläche der Ist-Oberfläche gebildet wird, und die Soll-Oberfläche in einem vorbestimmten Minimalabstand zu der am weitesten vorstehenden Erhebung der Ist-Oberfläche gelegt wird, und/oder die Soll-Oberfläche bündig zu der am weitesten vorstehenden Erhebung der Ist-Oberfläche gelegt wird.

Das Verfahren kann dadurch fortgebildet werden, dass das Volumen minimiert wird, indem die Soll-Oberfläche als eine die Ist-Oberfläche an zumindest einer Schnittposition schneidende Umhüllungsfläche der Ist-Oberfläche gebildet wird, und die Soll-Oberfläche so weit in Richtung der Ist-Oberfläche verschoben wird, dass der Abstand zwischen der Ist-Oberfläche und der Soll-Oberfläche an jeder Schnittposition einen vorbestimmten Maximalabstand unterschreitet, und/oder die Soll-Oberfläche so weit in Richtung der Ist-Oberfläche verschoben wird, dass die Anzahl der Schnittpositionen eine vorbestimmte Maximalanzahl unterschreitet.

Das Verfahren kann dadurch fortgebildet werden, dass vor dem Definieren der Soll-Oberfläche mindestens ein nach außen vorstehender Bereich des Schiffsrumpfes so bearbeitet wird, dass die Distanz, um die der Bereich nach außen vorsteht, verringert wird, insbesondere durch spanabhebende Bearbeitung oder Verformung und dass zumindest der bearbeitete Bereich hierauf folgend erneut gescannt wird, um eine Ist-Oberfläche zu bestimmen.

Das Verfahren kann dadurch fortgebildet werden, dass aus den Planungsdaten Bühnensteuerungsdaten zur Ansteuerung von Bühnenaktuatoren erzeugt werden, welche zur Bewegung einer verfahrbaren Bühne dienen, an der das Rahmengestell befestigt ist und dass die Bühne nach Abarbeitung eines ersten Steuerungsdatensatzes an einer ersten Bühnenposition verfahren wird zu einer zweiten Bühnenposition für eine Abarbeitung eines zweiten Steuerungsdatensatzes.

Das Verfahren kann dadurch fortgebildet werden, dass vor dem Schleifvorgang ein Spachtel- oder Füllmaterial auf den Schiffsrumpf aufgetragen wird, in einem automatisierten Fertigungsvorgang ein Hilfsprofil hergestellt wird, welches mit Hilfe von Profildaten hergestellt wird, die aus den gefilterten Scandaten und den Soll-Oberflächendaten erzeugt werden, wobei die Profildaten einen Geometrie eines Hilfsrahmens beschreiben, der auf einer ersten Längsseite der Kontur des Schiffsrumpfes entlang einer geraden oder gekrümmten, vorbestimmten Hilfslinie entspricht und auf einer hierzu gegenüberliegenden zweiten Längsseite der Kontur der Soll-Oberfläche entlang dieser Hilfslinie entspricht, und das Hilfsprofil vor Auftragen des Spachtel- oder Füllmaterials entlang der vorbestimmten Linie auf dem Schiffsrumpf befestigt wird

Weiterhin liegt ein Aspekt der Erfindung in einer Steuerungseinheit für einen Schleifroboter zur automatisierten Schleifbearbeitung eines Schiffsrumpfes innerhalb eines Bearbeitungsraumes oder für eine Materialauftragseinrichtung zum automatisierten Auftrag eines Materials auf einen Schiffsrumpf, umfassend eine Eingangsschnittstelle zum Einlesen von Scandaten des Schiffsrumpfes, welche die Oberflächengeometrie des Schiffsrumpfes beschreiben, ein Filterungsmodul, das ausgebildet ist zur Entfernung von Scandaten, die außerhalb des Schiffsrumpfes liegen, ein Planungsmodul, welches signaltechnisch mit dem Filterungsmodul gekoppelt und ausgebildet ist, um aus den gefilterten Scandaten eine den Schiffsrumpf umhüllende Soll-Oberfläche anhand von Soll-Oberflächendaten zu definieren, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist, ein Arbeitsvorbereitungsmodul, welches signaltechnisch mit dem Planungsmodul gekoppelt und ausgebildet ist, um aus den Soll-Oberflächendaten eine Mehrzahl von Arbeitsflächendatensätzen zu erstellen, wobei jeder Arbeitsflächendatensatz eine Fläche definiert, die kleiner oder gleich dem Bearbeitungszeitraum ist, und ein Steuerungsmodul, welches signaltechnisch mit dem Arbeitsvorbereitungsmodul gekoppelt und ausgebildet ist, um aus jedem Arbeitsflächendatensatz einen Steuerungsdatensatz für die Aktuatoreinrichtung zu erstellen, und eine Ausgangsschnittstelle zum Ausgeben der Steuerungsdatensätze an eine Aktuatoreinrichtung zur automatisierten Bewegung eines Schleifkopfes. Diese Steuerungseinheit kann Bestandteil eines Schleifroboters oder einer Materialauftragseinrichtung sein oder Bestandteil einer peripher und dezentral zum Schleifroboter bzw. der Materialauftragseinrichtung angeordneten Planungseinrichtung. Diese Planungseinrichtung dient dann der Vorbereitung und Steuerung eines Schleifvorgangs mittels eines Schleifroboters bzw. eine Materialauftragsvorgangs mittels einer Materialauftragsvorrichtung. Die Steuerungseinheit umfasst dabei solche Module, welche auch vorstehend im Zusammenhang mit dem Schleifroboter erläutert wurden und es wird insoweit Bezug auf die voranstehende Beschreibung genommen.

Die Steuerungseinheit kann in gleicher Weise wie der Schleifroboter fortgebildet werden, indem Filterungsmodul, Planungsmodul, Arbeitsvorbereitungsmodul und/oder Steuerungsmodul in der zuvor beschriebenen Weise fortgebildet werden oder ein Hilfsprofilmodul implementiert ist.

Ein weiterer Aspekt der Erfindung ist ein Verfahren zum Erstellen von Steuerungsdaten für einen Schleifvorgang an einem Schiffsrumpf mittels eines Schleifroboters zur automatisierten Schleifbearbeitung des Schiffsrumpfes innerhalb eines Bearbeitungsraumes und ein Verfahren zum Auftragen eines Materials auf einen Schiffsrumpf, indem ein mit einer Materialauftragseinheit ausgerüsteter Materialauftragskopf entlang des Schiffsrumpfes mittels einer Aktuatoreinrichtung, die den Materialauftragskopf mit einem Rahmengestell verbindet, in mindestens zwei zueinander senkrechten Richtungen relativ zu dem Rahmengestell innerhalb eines Bearbeitungsraumes bewegt wird. Diese Verfahren sind jeweils gekennzeichnet durch die Schritte Einlesen eines Scandatensatzes mit Scandaten, welche die Oberflächengeometrie des Schiffsrumpfes definieren, Filtern des Scandatensatzes zur Entfernung von solchen Scandaten, die außerhalb des Schiffsrumpfes liegen, in einem elektronischen, automatisierten Filterungsschritt, zur Erzeugung eines Filterscandatensatzes, Erzeugen aus dem Filterscandatensatz, eines Soll-Oberflächendatensatzes, welcher eine den Schiffsrumpf umhüllende Soll-Oberfläche definiert, in einem elektronisch automatisierten Planungsschritt, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist,, Erzeugen eines ersten Arbeitsflächendatensatzes und weiterer Arbeitsflächendatensätze aus dem Soll-Oberflächendatensatz, wobei jeder Arbeitsflächendatensatz eine Fläche definiert, die kleiner oder gleich dem Bearbeitungszeitraum ist, Erzeugen eines ersten Steuerungsdatensatzes und weiterer Steuerungsdatensätze aus den entsprechenden Arbeitsflächendatensätzen, Ausgeben der Steuerungsdatensätze. Das so von der Erfindung umfasste Verfahren dient dazu, Steuerungsdaten für ein Schleifvorgang bzw. einen Materialauftragsvorgang zu erstellen, was als unabhängiger und einem Schleifvorgang/Materialauftragsvorgang vorgelagerter Vorgang durchgeführt werden kann und gegebenenfalls auch an einer peripher und dezentral zum Schleifroboter/ zu der Materialauftragseinrichtung angeordneten Lokalität erfolgen kann.

Das erfindungsgemäße Verfahren zum Erstellen der Steuerungsdaten kann dabei in gleicher Weise fortgebildet werden wie die zuvor erläuterten Schritte zur Erstellung der Steuerungsdaten im Zuge des Schleifverfahrens und es wird hierauf Bezug genommen.

Das Schleifverfahren, das Materialauftragsverfahren oder das Erstellungsverfahren kann fortgebildet werden, indem der Scandatensatz in mehrere Teilscandatensätze aufgeteilt wird, die mehreren Teilscandatensätze einer zeitlich parallel ausgeführten, automatisierten oder manuellen Bearbeitung unterzogen werden und die Teilscandatensätze nach dieser Bearbeitung zu einem oder mehreren größeren Datensätzen zusammengefasst werden. Ein grundsätzliches Problem bei der Ausführung von Schleif- und Spachtelarbeiten an Schiffsrümpfen ist die große Vielfalt an geometrischen Besonderheiten, die Schiffsrümpfe aufweisen können. Dies führt dazu, dass die Steuerungsdaten für einen Schleifroboter für einige Schiffsrümpfe nicht vollständig durch ein automatisiertes Verfahren erstellt werden können, sondern an einem oder mehreren Schritten bei dieser Erstellung ein manueller Eingriff oder eine manuelle Datenbearbeitung durch eine Bedienperson notwendig ist. Dieser manuelle bearbeitungsschritt stellt regelmäßig einen zeitlichen Engpass dar. Es ist daher erfindungsgemäß in solchen Fällen vorteilhaft, wenn die manuelle Bearbeitung simultan durch mehrere Bedienpersonen durchgeführt werden kann. Zu diesem Zweck kann ein Scandatensatz, ebenso aber alternativ auch ein aus dem Scandatensatz durch Datenbearbeitung entstandener anderer Datensatz in mehrere kleine Datensätze unterteilt werden, die dann manuell bearbeitet und anschließend wieder zu einem oder mehreren größeren Datensätzen zusammengefasst werden. Es ist zu verstehen, dass sowohl der erfindungsgemäße Schleifroboter als auch die erfindungsgemäße Steuerungseinrichtung für eine entsprechende Datenunterteilung und - zusammenfassung ausgebildet sein können, um eine solche manuelle, zeitlich effiziente Datenbearbeitung zu ermöglichen.

Grundsätzlich kann die erfindungsgemäße Vorgehensweise zur Ermittlung der Ist-Oberfläche, zur optimierten Vorherbestimmung der Solloberfläche und der Erstellung von Steuerungsdaten daraus neben der Anwendung für ein Schleifverfahren oder ein Materialauftragsverfahren auch allgemein für andere Materialbearbeitungsverfahren zum Auftragen oder Abtragen von material eingesetzt werden. Dabei ist diesen Materialbearbeitungsverfahren gemeinsam, dass ein Bearbeitungskopf mittels zumindest zweier Aktuatoren in zumindest zwei Raumrichtungen bewegt wird und diese Aktuatoren von entsprechenden Steuerungsdaten gesteuert werden.

Ein weiterer Aspekt der Erfindung ist eine Materialauftragseinrichtung für einen Schiffsrumpf, umfassend: einen mit einem Materialauftrageinheit ausgerüsteten Materialauftragskopf, der an einer Aktuatoreinrichtung befestigt ist, die den Materialauftragskopf mit einem Rahmengestell verbindet und in mindestens zwei zueinander senkrechten Richtungen relativ zu dem Rahmengestell innerhalb eines Bearbeitungsraumes bewegen kann- Diese Materialauftragseinrichtung zeichnet sich erfindungsgemäß aus durch eine elektronische Steuerungseinheit, welche signaltechnisch mit der Aktuatoreinrichtung verbunden ist zur Steuerung der Bewegung des Materialauftragskopfs entlang der zumindest zwei Richtungen, die Steuerungseinheit umfassend:
- eine Eingangsschnittstelle zum Einlesen von Scandaten des Schiffsrumpfes, welche die Oberflächengeometrie des Schiffsrumpfes beschreiben,
- ein Filterungsmodul, das ausgebildet ist zur Entfernung von Scandaten, die außerhalb des Schiffsrumpfes liegen,
- ein Planungsmodul, welches signaltechnisch mit dem Filterungsmodul gekoppelt und ausgebildet ist, um aus den gefilterten Scandaten eine den Schiffsrumpf umhüllende Soll-Oberfläche anhand von Soll-Oberflächendaten zu definieren, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist,
- ein Arbeitsvorbereitungsmodul, welches signaltechnisch mit dem Planungsmodul gekoppelt und ausgebildet ist, um aus den Soll-Oberflächendaten eine Mehrzahl von Arbeitsflächendatensätzen zu erstellen, wobei jeder Arbeitsflächendatensatz eine Fläche definiert, die kleiner oder gleich dem Bearbeitungszeitraum ist, und
- ein Steuerungsmodul, welches signaltechnisch mit dem Arbeitsvorbereitungsmodul gekoppelt und ausgebildet ist, um aus jedem Arbeitsflächendatensatz einen Steuerungsdatensatz für die Aktuatoreinrichtung zu erstellen, und
- eine Ausgangsschnittstelle zum Ausgeben der Steuerungsdatensätze an die Aktuatoreinrichtung.

Gemäß dieses Erfindungsaspekts wird ein Materialauftrag, also beispielsweise ein Auftrag eines Spachtel- oder Füllermaterials, in einer automatisierten Weise solcherart ermöglicht, dass das Material in einer ortsabhängig vorbestimmten Materialdicke auf den Schiffsrumpf aufgetragen wird. Hierdurch kann ausgehend von der ermittelten Ist-Oberfläche das Material in vorbestimmter und vorberechneter Weise solcherart aufgetragen werden, dass das Material genau bis zur vorberechneten Solloberfläche reicht oder ein vorbestimmtes Maß über diese Solloberfläche hinausragt oder darunterbleibt. So kann die Dicke der aufgetragenen Materialschicht ortsaufgelöst für jeden Punkt des Schiffsrumpfes vorab berechnet und aus den Berechnungsdaten gesteuert erzeugt werden.

Die erfindungsgemäße Materialauftragseinrichtung beinhaltet Mittel, die vorab bestimmen, wieviel Material an jeder Stelle des Schiffsrumpfes aufgetragen werden muss, um die Distanz zwischen Ist- und Solloberfläche zu füllen. Die Materialauftrageinheit kann beispielsweise eine Öffnung oder Düse sein, die mittels einer Materialzufuhrleitung mit einem Materialreservoir verbunden ist und die mittels einer Dosiereinrichtung, beispielsweise einem steuerbaren Ventil, eine Dosierung der Materialmenge ermöglicht, die auf einen Ort des Schiffsrumpfes abgegeben wird. In diesem Fall wird durch die Steuerungsdaten nicht nur die Bewegung der Materialauftragskopfes, sondern auch die abgegebene Materialmenge gesteuert. Alternativ kann auch bei konstanter Materialabgabe die auf einen Ort des Schiffsrumpfes abgegebene Materialmenge dadurch dosiert werden, dass die Verfahrgeschwindigkeit der Materialauftragskopfes durch die Aktuatoren ortsaufgelöst unterschiedlich gesteuert wird. Hierbei wird an Rumpfpositionen, die eine dünne Materialschicht benötigen, eine hohe Verfahrgeschwindigkeit gesteuert, und an Rumpfpositionen, die eine dicke Materialschicht benötigen, eine demgegenüber niedrigere Verfahrgeschwindigkeit gesteuert.

Die Methodik der Berechnung der gewünschten, optimierten Solloberfläche und die Einrichtungen hierzu entsprechen dabei grundsätzlich den Einrichtungen bzw. der Methodik, die auch für den zuvor erläuterten erfindungsgemäßen Schleifroboter eingesetzt werden.

Grundsätzlich richtet sich die Erfindung im Rahmen dieser Offenbarung neben einem Schleifroboter und einer Materialauftragseinrichtung auch allgemein auf Oberflächenbehandlungsvorrichtungen zum Auftragen oder Abtragen von Material auf einen / von einem Schiffsrumpf, wobei diesen Oberflächenbehandlungsvorrichtungen jeweils gemeinsam ist, dass sie einen mittels zumindest zwei an einem Rahmengestell befestigten Aktuatoren in entsprechend zumindest zwei Raumrichtungen beweglichen Arbeitskopf aufweisen, der entsprechende Arbeitsmittel, wie ein Schleifmittel, eine Auftragseinheit, eine Sprüheinheit, eine Strahleinheit, eine Beschichtungseinheit oder dergleichen, aufweist.

Ein weiterer Aspekt der Erfindung ist ein Verfahren zum Auftragen eines Materials auf einen Schiffsrumpf, indem
- ein mit einer Materialauftragseinheit ausgerüsteter Materialauftragskopf entlang des Schiffsrumpfes mittels einer Aktuatoreinrichtung, die den Materialauftragskopf mit einem Rahmengestell verbindet, in mindestens zwei zueinander senkrechten Richtungen relativ zu dem Rahmengestell innerhalb eines Bearbeitungsraumes bewegt wird,
gekennzeichnet durch die Schritte:
- Scannen des Schiffsrumpfes mittels einer Erfassungseinrichtung zur Erzeugung eines digitalen Scandatensatzes, welche die Oberflächengeometrie des Schiffsrumpfes definieren,
- Filtern des Scandatensatzes zur Entfernung von solchen Scandaten, die außerhalb des Schiffsrumpfes liegen, in einem elektronischen, automatisierten Filterungsschritt, zur Erzeugung eines Filterscandatensatzes
- Erzeugen eines den Schiffsrumpf umhüllende Soll-Oberfläche definierenden Soll-Oberflächendatensatzes aus den Filterscandatensatzes in einem elektronisch automatisierten Planungsschritt, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist,
- Erzeugen eines ersten Arbeitsflächendatensatzes und weiterer Arbeitsflächendatensätzen aus dem Soll-Oberflächendatensatz, wobei jeder Arbeitsflächendatensatz eine Fläche definiert, die kleiner oder gleich dem Bearbeitungszeitraum ist,
- Erzeugen eines ersten Steuerungsdatensatzes und weiterer Steuerungsdatensätze aus den Arbeitsflächendatensätzen, wobei jeder Arbeitsflächendatensatz eine Fläche definiert, die kleiner oder gleich dem Bearbeitungszeitraum ist,
- Bewegen des Rahmengestells an eine erste Ausgangsposition und
- Steuern der Aktuatoreinrichtung mittels des ersten Steuerungsdatensatzes, und
- Bewegen des Rahmengestells an eine weitere Ausgangsposition und
- Steuern der Aktuatoreinrichtung mittels des weiteren Steuerungsdatensatzes.

Das Verfahren kann dabei nach den Merkmalen des zuvor beschriebenen Verfahrens zum Schleifen eines Schiffsrumpfes, insbesondere gemäß den Ansprüchen 9-16 fortgebildet werden

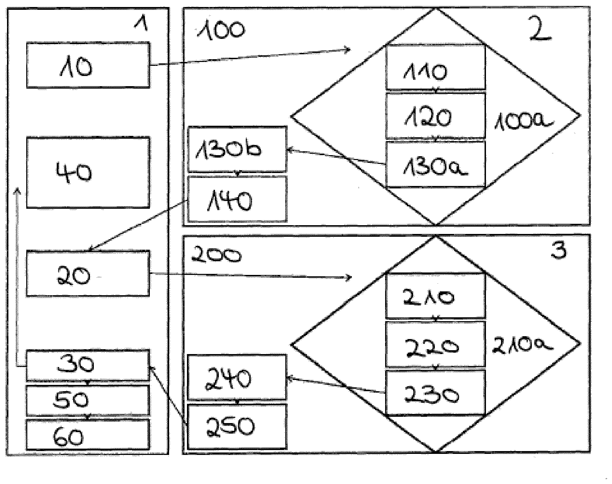

Eine bevorzugte Ausführungsform des erfindungsgemäßen Verfahrens wird anhand der beiliegenden Figur erläutert.

Die Figur zeigt ein schematisches Ablaufdiagramm für ein Verfahren zum Schleifen eines Schiffsrumpfes nach der Erfindung.

Das in der Figur dargestellte Verfahren beginnt mit einem Schritt 10 zur Abtastung der Oberfläche des Schiffsrumpfes und Erstellung zumindest eines Scandatensatzes, in der Regel mehrerer Scandatensätze, welche die hierbei ermittelten Abtastdaten beinhalten. Diese Abtastung erfolgt typischerweise durch eine Scanvorrichtung wie einen Laserscanner, der über einen Abschnitt des Schiffsrumpfes oder den gesamten Schiffsrumpf geführt wird. Ergebnis dieses Abtastvorgangs sind die in der Regel mehreren Scandatensätze, in denen eine Vielzahl von Scandatenpunkten durch dreidimensionale Koordinaten enthalten sind. Diese Scandatenpunkte beschreiben die Oberfläche des Schiffsrumpfes, sind jedoch in der Praxis regelmäßig nicht artefaktfrei und bedürfen der Weiterverarbeitung, um daraus einen maschinellen Bearbeitungsvorgang steuern zu können..

Die so durch die Abtastung erstellten Scandatensätze werden einem Registrierungsmodul 100 zugeleitet, welches ein Filterungsmodul umfasst. Diese Zuleitung kann mittels automatisierter Datenübertragung aus der Scanvorrichtung heraus erfolgen, beispielsweise mittels Datenkabel oder drahtloser Übertragungstechnik. Ebenso kann der Datensatz aus der Scanvorrichtung auf einen Zwischenspeicher geladen werden und dieser Zwischenspeicher von der Scanvorrichtung getrennt und mit der Registrierungsvorrichtung verbunden werden, um die Scandatensätze zu übertragen.

In dem Registrierungsmodul 100 wird zunächst in einem Verfahrensschritt 110 eine Löschung derjenigen Scandatenpunkte vorgenommen, die Objekte beschreiben, welche außerhalb des Schiffsrumpfes liegen. Die Auswahl der zu löschenden Datenpunkte erfolgt dabei, in dem aus der Gesamtzahl der Datenpunkte eine parametrisierte, vektorisierte Fläche oder ein Volumen ermittelt wird, in der/dem die überwiegende Anzahl der Datenpunkte liegt oder die eine Mittelung über sämtliche Datenpunkte darstellt. Das Ergebnis dieser Flächenbestimmung sind Vektorparameter, die eine Fläche / ein Volumen beschreiben, in der/dem die meisten Datenpunkte liegen oder zu der die meisten Datenpunkte einen sehr geringen Abstand aufweisen. Bevorzugt können hierbei die Eckpunkte des Schiffsrumpfes manuell vorgegeben oder automatisiert mittels einer Flächenanalyse aus den Datenpunkten ermittelt werden (vorne-oben, vorne-unten, hinten-oben, hinten-unten) und aus diesen Eckpunkten und einem Sicherheitsabstand ein Quader berechnet wird. In diesem Quader liegen alle Scandatenpunkte des Scandatensatzes, die tatsächlich einen auf dem Schiffsrumpf liegenden Punkt beschreiben. Alle Punkte außerhalb dieses Quaders werden entfernt. Dieser Schritt des Registrierungsverfahrens wird für jeden Scandatensatz separat ausgeführt.

Alternativ kann in einer anderen bevorzugten Ausführungsform auch aus der Gesamtzahl der Scandatenpunkte eines Scandatensatzes eine parametrisierte, vektorisierte Fläche ermittelt werden, in der die überwiegende Anzahl der Scandatenpunkte liegt oder die eine Mittelung über sämtliche Scandatenpunkte eines Scandatensatzes darstellt. Das Ergebnis dieser Flächenbestimmung sind Vektorparameter, die eine Fläche beschreiben, in der die meisten Scandatenpunkte liegen oder zu der die meisten Datenpunkte einen sehr geringen Abstand aufweisen. Nachfolgend werden anhand eines Abstandskriteriums diejenigen Scandatenpunkte ermittelt, die in einem Abstand zu dieser durch die Vektorparameter beschriebenen Fläche liegen, der oberhalb eines vorbestimmten Maximalabstands liegt. Diese Scandatenpunkte stellen typischerweise Artefakte dar, die andere Objekte als den Schiffsrumpf beschreiben, beispielsweise Arbeitsgerüste, Bodenflächen, Stützen, Böcke oder dergleichen. Gegebenenfalls können weitere Kriterien bei der Löschung von Datenpunkten herangezogen werden. So ist es in einigen Anwendungsfällen vorteilhaft, wenn als weitere Bedingung für die Löschung eines Datenpunktes zugrundegelegt wird, dass benachbart zu diesem Datenpunkt keine Datenpunkte in einer vorbestimmten Anzahl oder mehr als einer vorbestimmten Anzahl ermittelt werden, die den selben Abstand von der parametrisierten Oberfläche aufweisen.

Nach Schritt 110 wird eine Transformation (Translation und Rotation) für jeweils ein Paar von zwei Datensätzen in einem nachfolgenden Schritt 120 berechnet. Bei dieser Transformation wird das Koordinatensystem des einen Datensatzes des Paares in das Koordinatensystem des anderen Datensatzes des Paares transformiert und aus den zwei Scandatensätzen ein zusammengefasster Transformationsdatensatz erstellt. Die Transformation bezieht alle Datenpunkte und Referenzpunkte des einen Scandatensatzes auf den Nullpunkt des anderen Scandatensatz. Dabei wird eine Transformation für jede Paarung von zwei Datensätzen aus der Vielzahl der Datensätze durchgeführt, sodass aus beispielsweise drei Datensätzen drei Transformationen, aus vier Datensätzen sechs Transformationen und allgemein aus n Datensätzen der Binomialkoeffizient n über 2 = n!/(2 x n-2)! Transformationen berechnet werden.

Die Referenzpunkte sind physikalisch am Schiffsrumpf definierte Punkte, zB aufgeklebte Markierungen oder Reflexionskugeln. Diese Referenzpunkte können Punkte auf dem Schiffsrumpf selbst oder außerhalb des Schiffsrumpfes sein.

Jede in Schritt 120 ausgeführte Transformation weist einen Fehlerwert auf, der ein Maß für die durch die Summe der Distanzen der Transformation verursachte Bewegung der Referenzpunkte des Transformationsdatensatzes relativ zu den entsprechenden Referenzpunkten des nicht transformierten Scandatensatzes ist. Nach der Berechnung aller paarweisen Transformationen in Schritt 120 werden durch Vergleich dieser Fehlerwerte diejenigen Transformationen ausgewählt, die den geringsten Fehlerwert haben. Diese werden nun auf die jeweiligen Scandatensätze in einem Schritt 130a angewendet, so dass sich die Anzahl der Scandatensätze auf insgesamt eine halbierte Anzahl an Transformationsdatensätzen reduziert. Diese Transformation wird so oft wiederholt, bis aus der Vielzahl der Scandatensätze ein einziger Rumpfdatensatz mit einem gemeinsamen Koordinatensystem erhalten wird. In einem Schritt 130b wird dieser Rumpfdatensatz dann an der Y-Z-Ebene ausgerichtet

In einem nachfolgenden Schritt 140 kann der Rumpfdatensatz dann in eine Mehrzahl von kleineren Rumpfteildatensätzen unterteilt und solcher Art abgespeichert werden. Diese Unterteilung ist nicht in allen bevorzugten Ausführungsformen notwendig, kann aber insbesondere bei großen Datenmengen durchgeführt werden um nachfolgende Datenverarbeitungsschritte zeitlich abzukürzen indem eine zeitlich parallele Datenbearbeitung durchgeführt wird. Diese parallele Datenbearbeitung kann sich sowohl auf manuelle, von einer Bedienperson durchzuführende Arbeitsschritte als auch auf automatisiert durchgeführte Arbeitsschritte richten.

Dieser eine Rumpfdatensatz, oder diese mehreren Rumpfteildatensätze können nun in einem Schritt 20 manuell bearbeitet werden mit dem Ziel, alle Datenpunkte aus dem Rumpf(teil)datensatz zu löschen die nicht zum Rumpf des Schiffes gehören. Je nach den praktischen Bedingungen des Scanvorgangs und der Oberflächenstruktur des Schiffsrumpfes können in Schritt 110 alle oder nur die meisten Punkte gelöscht werden, die nicht zu bearbeitende Abschnitte des Schiffsrumpfes oder Artefakte darstellen. Insbesondere dann, wenn eine manuelle Nachbearbeitung durch eine Bedienperson erforderlich ist, kann dieser Vorgang beschleunigt werden indem man im Schritt 140 die Datenpunkte in mehrere Datensätze aufteilt und dadurch eine zeitlich parallele Bearbeitung durch mehrere Bedienpersonen ermöglicht.

Ein Schiffsrumpf kann verschiedene Diskontinuitäten wie beispielsweise Kanten oder Stufen beinhalten. Diese Diskontinuitäten können durch Splines wie beispielsweise NURBS Flächen, die gemäß der bevorzugten Ausführungsform automatisiert zur Flächenbeschreibung erstellt werden sollen, nicht mit ausreichender Genauigkeit beschrieben werden. Daher wird im Schritt 140 entweder manuell durch die Bedienperson oder automatisiert durch automatisierte Erkennung der Diskontinuitäten die Menge aller verbliebenen Datenpunkte des Rumpfdatensatzes in mehrere Flächendatensätze unterteilt und so abgespeichert, wobei jeder Flächendatensatz einen Schiffsrumpfabschnitt ohne Diskontinuitäten beschreibt.

Die folgenden Schritte 210 bis 230 werden nun für jeden dieser Flächendatensätze ausgeführt und die daraus resultierenden Daten dann im Schritt 240 zu einem einzigen Ausgabedatensatz vereinigt.

Die Flächendatensätze können unmittelbar einem Oberflächenbearbeitungsmodul 200 zugeführt werden, was wiederum durch unmittelbare, leitungsgestützte Datenübertragung, drahtlose Datenübertragung oder Datenübertragung durch ein physikalisches Speicherelement erfolgen kann. Das Oberflächenbearbeitungsmodul 200 umfasst ein Planungs- und ein Arbeitsvorbereitungsmodul.

In dem Oberflächenmodul 200 erfolgt in einem Schritt 210 zunächst eine Glättung und Filterung der Datenpunkte des Flächendatensatzes. Die Datenpunkte stellen bis zu diesem Zeitpunkt noch Rohwerte aus dem Scanprozess dar und können noch bestimmte Scanartefakte aus dem Scanprozess enthalten. Diese Scanartefakte aus dem Scanprozess können beispielsweise durch Staubpartikel oder unterschiedliche Reflexionseigenschaften von Rumpfoberflächen während des Scanvorgangs erzeugt werden und werden daher nun entweder in einer automatisierten Filterung entfernt oder in einer Glättung herausgerechnet. Die Filterung basiert bevorzugt auf einer statistischen Ausreißererkennung, die solche Punkte löscht, die statistisch nicht zur Punktewolke gehören. Die Glättung basiert auf einem Anziehungsverfahren in dem benachbarte Punkte andere Punkte in einer virtuellen gegenseitigen Annäherung quasi-schwerkraftsmäßig anziehen und daher eine Weichzeichnung über die Menge aller Datenpunkte erreicht wird.

Hierauf folgend werden in einem Schritt 220 nicht-uniforme rationale B-Splines (NURBS) aus den geglätteten und gefilterten Flächendatensätzen erzeugt. Durch NURBS werden Flächen, die eine Krümmung aufweisen mathematisch definiert, so dass eine standardisierte Flächenbeschreibung anhand von mathematischen Flächenparametern für die zu bearbeitende Fläche erzeugt wird.

Bei der mathematischen Definition der Flächen erfolgt dabei eine Definition der Soll-Oberfläche in einem Versatz von der durch die Abtastung und Datenbearbeitung ermittelten Ist-Oberfläche des Schiffsrumpfes nach außen. Dieser Versatz erfolgt unter der harten Randbedingung, dass kein Flächenanteil der Ist-Oberfläche außerhalb von der Soll-Oberfläche liegen darf, das heißt, die Solloberfläche hat in jedem Punkt einen Mindestabstand von der ermittelten Ist-Oberfläche und die Ist-Oberfläche liegt zwischen dem Innenraum des Schiffsrumpfes und der Soll-Oberfläche. Zugleich wird als weiteres Kriterium bei der Berechnung der Solloberfläche berücksichtigt, dass zwischen der Ist-Oberfläche und der Soll-Oberfläche ein möglichst geringes Volumen verbleibt. Dieses Volumen zwischen Ist-Oberfläche und Soll-Oberfläche entspricht dem minimal zu verwendenden Spachtelvolumen. Ebenfalls muss die Soll-Oberfläche eine möglichst einheitliche Krümmung aufweisen, so dass die endgültige Schiffsoberfläche eine ästhetische Reflexionseigenschaft aufweist. Um eine NURBS Fläche zu erhalten, die diese Eigenschaften hat, werden aus einer initialen NURBS Fläche aus Schritt 220, nun in Schritt 230 die Kontrollpunkte der NURBS Fläche entsprechend bewegt. Die Bewegung erfolgt ausschließlich entlang des Normalvektors der Ist-Oberfläche und um solche Beträge, dass ein vorbestimmter Maximalwert für eine Krümmungsänderung, beispielsweise definiert als Krümmungswertdifferenz zwischen zwei Oberflächenpunkten geteilt durch die Distanz zwischen den zwei Punkten, nicht überschritten wird.

Optional können Steuerungspunkte eingestellt werden, die zur Steuerung des Roboters bei seiner Einjustierung und zur Kontrolle des Roboters während der Bearbeitung des Schiffsrumpfes durch den Roboter dienen.

Nach der Einjustierung der Steuerungspunkte erfolgt in einem nachfolgenden Schritt 240 die Ausgabe der so berechneten Oberfläche und einer Volumenkonturdarstellung, aus der hervorgeht, an welcher Stelle im Abgleich der Soll-Oberfläche und der Ist-Oberfläche welche Dicke an Spachtelmasse benötigt wird. Diese Ausgabe von Oberfläche und Volumenkonturdarstellung ermöglicht es einem Benutzer, die in dem automatisierten Berechnungsvorgang ermittelte Spachtelmasse und Spachteldicke zu überprüfen. Hierbei kann auf Industriestandardformate wie IGES, STEP oder PHIGS zurückgegriffen werden, um die mathematische Flächenbeschreibung in standardisierter Form abzuspeichern.

Aus der Volumenkonturdarstellung werden dann in einem nachfolgenden Schritt 250 noch Geometriedaten für Hilfslinien berechnet. Diese Hilfslinien werden als physikalische Streifen mit konturiertem Dickenverlauf aus diesen Geometriedaten der Hilfslinien hergestellt. Die Hilfslinien werden dann an dem Schiffsrumpf entlang einer vorbestimmten Linie, die dem Profilverlauf entlang dieser Hilfslinie entspricht, aufgeklebt und stellen damit eine Referenz und physikalische Kontrolle des Schleifvorgangs dar und können zur Einjustierung des Schleifroboters herangezogen werden. Die Rumpfabschnittdatensätze werden nachfolgend noch unterteilt in Bearbeitungsdatensätze, die einen Rumpfabschnitt beschreiben, der eine Größe aufweist, die dem Bearbeitungsraum eines Schleifroboters entspricht. Aus diesen Bearbeitungsdatensätzen werden dann die Steuerungsdaten für den Schleifvorgang erstellt, mit denen der Schleifroboter gesteuert wird, um die Soll-Oberfläche aus der gespachtelten Oberfläche zu erzeugen. Gegebenenfalls können aus den Bearbeitungsdatensätzen auch alternativ oder zusätzlich entsprechende Spachtelsteuerungsdatensätze erstellt werden, wenn der Spachtelauftrag automatisiert erfolgen soll, um damit eine Spachtelauftragseinrichtung anzusteuern.

Nach dem Schritt 250 sind die für eine Schleifbearbeitung des Schiffsrumpfs und gegebenenfalls auch einen Spachtelauftrag erforderlichen Berechnungsschritte abgeschlossen und die hierfür benötigten Datensätze erzeugt. In einem nachfolgenden Schritt 30 können diese Soll-Oberflächen, das Spachtelvolumen und die Hilfslinien durch einen Benutzer überprüft werden. Ergibt diese Überprüfung, dass die Soll-Oberfläche nicht einer gewünschten, praktikablen und effizienten Geometrie des Schiffsrumpfs entspricht oder ein unwirtschaftliche Bearbeitung des Schiffsrumpfes beim Schleifprozess erzeugt, kann der Benutzer eine Schleife 40 definieren, so dass der Berechnungsprozess ab einem bestimmten Berechnungsschritt erneut durchgeführt wird und hierbei beispielsweise Sollvorgaben machen, Randparameter oder Grenzwerte anders definieren, um das Ergebnis zu optimieren.

Sofern die Überprüfung durch den Benutzer ein gewünschtes Ergebnis der Soll-Oberfläche und eine praktikable Schleifbearbeitung ergeben hat, erfolgt eine numerische Simulation des Schleifvorgangs zur Überprüfung der tatsächlichen Bearbeitungsschritte und Vermeidung von Kollisionen durch einen Simulationsschritt 50. Aus diesem Simulationsschritt heraus werden die Bearbeitungsparameter dann an den Schleifroboter weitergegeben, damit der Schleifroboter unter Abarbeitung der Bearbeitungsdaten in einem Schritt 60 die Schleifbearbeitung an dem Schiffsrumpf automatisiert durchführen kann.

### Bezuqszeichenliste

- 10: Einlesen von Scandaten
- 20: Manuelle Nachbearbeitung aller Datensätze (zur Löschung aller Punkte außerhalb des Schiffsrumpfes)
- 30: Kontrolle
- 40: mögliche Rückkehr zu vorherigen Berechnungsschritten und erneute Durchführung von Berechnungsprozessen nach Änderung der Berechnungsvorgaben
- 50: Simulation & Vorbereitung
- 60: Arbeitsablauf
- 130b: Ausrichten an der Y-Z-Ebene
- 140: Unterteilung und Abspeicherung in kleinere Rumpfteildatensätze
- 110: Löschen der Scandatenpunkte außerhalb des Schiffsrumpfes
- 120: Berechnung der Transformation anhand von Referenzpunkten
- 130a: Ausrichten an gemeinsamen Rahmen
- 100a: für jedes Datensatzpaar
- 240: Ausgabe einer Volumenkonturdarstellung (Abgleich der Soll- und Ist-Oberfläche)
- 250: Ausgabe von Geometriedaten für Hilfslinien
- 210: Glätten und Filtern der Datenpunkte des Flächendatensatzes
- 210a: bei jedem gewölbten Bereich
- 220: Erzeugen von NURBS
- 230: Anpassung der Kontrollpunkte der NURBS-Fläche
- 100: Registrierungsmodul
- 200: Oberflächenmodul
- 1: Benutzer

## Patentansprüche

1. Oberflächenbehandlungsvorrichtung für einen Schiffsrumpf, umfassend:
einen mit einer Auftragseinheit ausgerüsteten Arbeitskopf, der an einer Aktuatoreinrichtung befestigt ist, die den Arbeitskopf mit einem Rahmengestell verbindet und in mindestens zwei zueinander senkrechten Richtungen relativ zu dem Rahmengestell innerhalb eines Bearbeitungsraumes bewegen kann,
**gekennzeichnet durch** eine elektronische Steuerungseinheit, welche signaltechnisch mit der Aktuatoreinrichtung verbunden ist zur Steuerung der Bewegung des Arbeitskopfs entlang der zumindest zwei Richtungen, die Steuerungseinheit umfassend:
- eine Eingangsschnittstelle zum Einlesen von Scandaten des Schiffsrumpfes, welche die Oberflächengeometrie des Schiffsrumpfes beschreiben,
- ein Filterungsmodul, das ausgebildet ist zur Entfernung von Scandaten, die au-ßerhalb des Schiffsrumpfes liegen,
- ein Planungsmodul, welches signaltechnisch mit dem Filterungsmodul gekoppelt und ausgebildet ist, um aus den gefilterten Scandaten eine den Schiffsrumpf umhüllende Soll-Oberfläche anhand von Soll-Oberflächendaten zu definieren, wobei die Soll-Oberfläche durch eine Aufteilung der gefilterten Scandaten in mehrere Flächendatensätze solcherart definiert ist, dass jeder Flächendatensatz eine Fläche definiert, die frei von Diskontinuitäten ist,
- ein Arbeitsvorbereitungsmodul, welches signaltechnisch mit dem Planungsmodul gekoppelt und ausgebildet ist, um aus den Soll-Oberflächendaten eine Mehrzahl von Arbeitsflächendatensätzen zu erstellen, wobei jeder Arbeitsflächendatensatz eine Fläche definiert, die kleiner oder gleich dem Bearbeitungsraum ist, und
- ein Steuerungsmodul, welches signaltechnisch mit dem Arbeitsvorbereitungsmodul gekoppelt und ausgebildet ist, um aus jedem Arbeitsflächendatensatz einen Steuerungsdatensatz für die Aktuatoreinrichtung zu erstellen, und
- eine Ausgangsschnittstelle zum Ausgeben der Steuerungsdatensätze an die Aktuatoreinrichtung, und
das Planungsmodul ausgebildet ist, um ein Volumen zu berechnen, welches durch die Soll-Oberfläche und die Oberflächengeometrie des Schiffsrumpfes begrenzt wird und das Volumen durch virtuelle Verschiebung der Soll-Oberfläche minimiert wird.

2. Oberflächenbehandlungsvorrichtung nach Anspruch 1,
**dadurch gekennzeichnet, dass** das Filterungsmodul ausgebildet ist, um aus den Scandaten eine ebene oder eine in einer stetigen Krümmung verlaufende Referenzoberfläche zu bilden, in der eine Mehrzahl der Scandatenpunkte liegt, und um Scandatenpunkte, welche außerhalb eines vorbestimmten Toleranzabstands zu der Referenzoberfläche liegen, aus dem Scandatensatz zu entfernen.

3. Oberflächenbehandlungsvorrichtung nach Anspruch 1,
**dadurch gekennzeichnet, dass** das Planungsmodul ausgebildet ist, um die Soll-Oberfläche in einem automatisierten Planungsvorgang zu definieren, indem:
- auf der Soll-Oberfläche stehende Normalvektoren gebildet werden und die Soll-Oberfläche so geformt ist, dass alle Normalvektoren von einem durch den Schiffsrumpf begrenzten Schiffsinnenraum wegweisen und
- eine zweite mathematische Ableitung der Soll-Oberfläche gebildet wird und die Soll-Oberfläche so geformt ist, dass die zweite mathematische Ableitung der Soll-Oberfläche an jeder Stelle der Soll-Oberfläche und in jeder Richtung entlang der Soll-Oberfläche einen vorbestimmten maximalen Krümmungswert unterschreitet.

4. Oberflächenbehandlungsvorrichtung nach Anspruch 1 oder 3,
**dadurch gekennzeichnet, dass** das Planungsmodul ausgebildet ist, um das Volumen zu minimieren, indem:
- Die Soll-Oberfläche als Umhüllungsfläche der Ist-Oberfläche gebildet wird, und
- Die Soll-Oberfläche in einem vorbestimmten Minimalabstand zu der am weitesten vorstehenden Erhebung der Ist-Oberfläche gelegt wird, und/oder
- Die Soll-Oberfläche bündig zu der am weitesten vorstehenden Erhebung der Ist-Oberfläche gelegt wird.

5. Oberflächenbehandlungsvorrichtung nach Anspruch 1 oder 3,
**dadurch gekennzeichnet, dass** das Planungsmodul ausgebildet ist, um das Volumen zu minimieren, indem:
- Die Soll-Oberfläche als eine die Ist-Oberfläche an zumindest einer Schnittposition schneidende Umhüllungsfläche der Ist-Oberfläche gebildet wird, und
- Die Soll-Oberfläche so weit in Richtung der Ist-Oberfläche verschoben wird, dass der Abstand zwischen der Ist-Oberfläche und der Soll-Oberfläche an jeder Schnittposition einen vorbestimmten Maximalabstand unterschreitet, und/oder
- Die Soll-Oberfläche so weit in Richtung der Ist-Oberfläche verschoben wird, dass die Anzahl der Schnittpositionen eine vorbestimmte Maximalanzahl unterschreitet.

6. Oberflächenbehandlungsvorrichtung nach einem der vorhergehenden Ansprüche, **dadurch gekennzeichnet, dass** das Rahmengestell mit einer mittels Bühnenaktuatoren verfahrbaren Bühne verbunden ist und das Steuerungsmodul Steuerungsdaten zur Ansteuerung der Bühnenaktuatoren erstellt, mittels derer die Bühne nach Abarbeitung eines ersten Steuerungsdatensatzes zu einer Position für eine Abarbeitung eines zweiten Steuerungsdatensatzes verfahrbar ist.

7. Oberflächenbehandlungsvorrichtung nach einem der vorhergehenden Ansprüche, **gekennzeichnet durch** ein Hilfsprofilmodul, welches ausgebildet ist, um aus den gefilterten Scandaten und den Soll-Oberflächendaten Profildaten eines Hilfsrahmenprofils zu erzeugen, wobei die Profildaten einen Geometrie eines Hilfsrahmens beschreiben, der auf einer ersten Längsseite der Kontur des Schiffsrumpfes entlang einer geraden oder gekrümmten, vorbestimmten Hilfslinie entspricht und auf einer hierzu gegenüberliegenden zweiten Längsseite der Kontur der Soll-Oberfläche entlang dieser Hilfslinie entspricht.

8. Verfahren zur Oberflächenbehandlung eines Schiffsrumpfes, indem
- ein mit einer Auftragseinheit ausgerüsteter Arbeitskopf entlang des Schiffsrumpfes mittels einer Aktuatoreinrichtung, die den Arbeitskopf mit einem Rahmengestell verbindet, in mindestens zwei zueinander senkrechten Richtungen relativ zu dem Rahmengestell innerhalb eines Bearbeitungsraumes bewegt wird,
**gekennzeichnet durch** die Schritte:
- Scannen des Schiffsrumpfes mittels einer Erfassungseinrichtung zur Erzeugung eines digitalen Scandatensatzes, welche die Oberflächengeometrie des Schiffsrumpfes definieren,
- Filtern des Scandatensatzes zur Entfernung von solchen Scandaten, die außerhalb des Schiffsrumpfes liegen, in einem elektronischen, automatisierten Filterungsschritt, zur Erzeugung eines Filterscandatensatzes
- Erzeugen eines den Schiffsrumpf umhüllende Soll-Oberfläche definierenden Soll-Oberflächendatensatzes aus dem Filterscandatensatz in einem elektronisch automatisierten Planungsschritt, wobei die Soll-Oberfläche durch eine Aufteilung der gefilterten Scandaten in mehrere Flächendatensätze solcherart definiert, dass jeder Flächendatensatz eine Fläche definiert, die frei von Diskontinuitäten ist,
- Erzeugen eines ersten Arbeitsflächendatensatzes und weiterer Arbeitsflächendatensätzen aus dem Soll-Oberflächendatensatz, wobei jeder Arbeitsflächendatensatz eine Fläche definiert, die kleiner oder gleich dem Bearbeitungsraum ist,
- Erzeugen eines ersten Steuerungsdatensatzes und weiterer Steuerungsdatensätze aus den Arbeitsflächendatensätzen, Bewegen des Rahmengestells an eine erste Ausgangsposition und
- Steuern der Aktuatoreinrichtung mittels des ersten Steuerungsdatensatzes, und
- Bewegen des Rahmengestells an eine weitere Ausgangsposition und
- Steuern der Aktuatoreinrichtung mittels des weiteren Steuerungsdatensatzes
und in dem Planungsschritt ein Volumen berechnet wird, welches durch die Soll-Oberfläche und die Oberflächengeometrie des Schiffsrumpfes begrenzt wird und das Volumen durch virtuelle Verschiebung der Soll-Oberfläche minimiert wird.

9. Verfahren nach Anspruch 8,
**dadurch gekennzeichnet, dass** in dem Filterungsschritt aus dem Scandatensatz eine ebene oder eine in einer stetigen Krümmung verlaufende Referenzoberfläche gebildet wird, in der eine Mehrzahl der durch die Scandaten des Scandatensatzes definierte Punkte liegt, und Entfernen solcher Scandaten, welche Punkte definieren, die außerhalb eines vorbestimmten Toleranzabstands zu der Referenzoberfläche liegen, aus dem Scandatensatz.

10. Verfahren nach Anspruch 9,
**dadurch gekennzeichnet, dass** in dem Planungsschritt die Soll-Oberfläche in einem automatisierten Planungsvorgang definiert wird, indem:
- auf der Soll-Oberfläche stehende Normalvektoren gebildet werden und die Soll-Oberfläche so geformt wird, dass alle Normalvektoren von einem durch den Schiffsrumpf begrenzten Schiffsinnenraum wegweisen und
- eine zweite mathematische Ableitung der Soll-Oberfläche gebildet wird und die Soll-Oberfläche so geformt wird, dass die zweite mathematische Ableitung der Soll-Oberfläche an jeder Stelle der Soll-Oberfläche und in jeder Richtung entlang der Soll-Oberfläche einen vorbestimmten maximalen Krümmungswert unterschreitet.

11. Verfahren nach Anspruch 9 oder 10,
**dadurch gekennzeichnet, dass** das Volumen minimiert wird, indem:
- Die Soll-Oberfläche als Umhüllungsfläche der Ist-Oberfläche gebildet wird, und
- Die Soll-Oberfläche in einem vorbestimmten Minimalabstand zu der am weitesten vorstehenden Erhebung der Ist-Oberfläche gelegt wird, und/oder
- Die Soll-Oberfläche bündig zu der am weitesten vorstehenden Erhebung der Ist-Oberfläche gelegt wird.

12. Verfahren nach Anspruch 9 oder 10,
**dadurch gekennzeichnet, dass** das Volumen minimiert wird, indem:
- Die Soll-Oberfläche als eine die Ist-Oberfläche an zumindest einer Schnittposition schneidende Umhüllungsfläche der Ist-Oberfläche gebildet wird, und
- Die Soll-Oberfläche so weit in Richtung der Ist-Oberfläche verschoben wird, dass der Abstand zwischen der Ist-Oberfläche und der Soll-Oberfläche an jeder Schnittposition einen vorbestimmten Maximalabstand unterschreitet, und/oder
- Die Soll-Oberfläche so weit in Richtung der Ist-Oberfläche verschoben wird, dass die Anzahl der Schnittpositionen eine vorbestimmte Maximalanzahl unterschreitet.

13. Verfahren nach Anspruch 9 oder 10,
**dadurch gekennzeichnet, dass** vor dem Definieren der Soll-Oberfläche mindestens ein nach außen vorstehender Bereich des Schiffsrumpfes so bearbeitet wird, dass die Distanz, um die der Bereich nach außen vorsteht, verringert wird, insbesondere durch spanabhebende Bearbeitung oder Verformung und dass zumindest der bearbeitete Bereich hierauffolgend erneut gescannt wird, um eine Ist-Oberfläche zu bestimmen.

14. Verfahren nach einem der vorhergehenden Ansprüche 8-13,
**dadurch gekennzeichnet, dass** aus den Planungsdaten Bühnensteuerungsdaten zur Ansteuerung von Bühnenaktuatoren erzeugt werden, welche zur Bewegung einer verfahrbaren Bühne dienen, an der das Rahmengestell befestigt ist und dass die Bühne nach Abarbeitung eines ersten Steuerungsdatensatzes an einer ersten Bühnenposition verfahren wird zu einer zweiten Bühnenposition für eine Abarbeitung eines zweiten Steuerungsdatensatzes.

15. Verfahren nach einem der vorhergehenden 8-14,
**dadurch gekennzeichnet, dass**
- vor einem Schleifvorgang ein Spachtel- oder Füllmaterial auf den Schiffsrumpf aufgetragen wird,
- in einem automatisierten Fertigungsvorgang ein Hilfsprofil hergestellt wird, welches mit Hilfe von Profildaten hergestellt wird, die aus den gefilterten Scandaten und den Soll-Oberflächendaten erzeugt werden, wobei die Profildaten einen Geometrie eines Hilfsrahmens beschreiben, der auf einer ersten Längsseite der Kontur des Schiffsrumpfes entlang einer geraden oder gekrümmten, vorbestimmten Hilfslinie entspricht und auf einer hierzu gegenüberliegenden zweiten Längsseite der Kontur der Soll-Oberfläche entlang dieser Hilfslinie entspricht, und
- das Hilfsprofil vor Auftragen des Spachtel- oder Füllmaterials entlang der vorbestimmten Linie auf dem Schiffsrumpf befestigt wird.

## Claims

1. Surface treatment device for a vessel hull, comprising:
a working head equipped with an application unit, said working head being fastened to an actuator device, which connects the working head to a rack and can move in at least two directions perpendicular to one another relative to the rack within a processing space,
**characterised by** an electronic control unit which is connected by means of signal technology to the actuator device to control the movement of the working head along the at least two directions, the control unit comprising:
- an input interface to read scan data of the vessel hull which plots the surface geometry of the vessel hull,
- a filtering module designed to remove scan data located outside of the vessel hull,
- a planning module which is coupled by means of signal technology to the filtering module and is designed to define a target surface covering the vessel hull from the filtered scan data using target surface data, wherein the target surface is defined by dividing the filtered scan data into a plurality of surface data sets in such a manner that each surface data set defines a surface which is free of discontinuities,
- a work preparation module which is coupled by means of signal technology to the planning module and is designed to create a plurality of work surface data sets from the target surface data, wherein each work surface data set defines a surface which is smaller than or equal to the processing space, and
- a control module which is coupled by means of signal technology to the work preparation module and is designed to create a control data set for the actuator device from each work surface data set, and
- an output interface to output the control data sets to the actuator device and
the planning module is designed to calculate a volume which is delimited by the target surface and the surface geometry of the vessel hull and the volume is minimised by virtually moving the target surface.

2. Surface treatment device according to claim 1,
**characterised in that** the filtering module is designed to form, from the scan data, a flat reference surface or a reference surface running in a continuous curve in which a plurality of scan data points are located and to remove, from the scan data set, scan data points which are located outside of a predetermined tolerance distance to the reference surface.

3. Surface treatment device according to claim 1,
**characterised in that** the planning module is designed to define the target surface in an automated planning operation by:
- normal vectors located on the target surface being formed and the target surface being shaped such that all normal vectors point away from a vessel interior delimited by the vessel hull and
- a second mathematical derivation of the target surface being formed and the target surface being shaped such that the second mathematical derivation of the target surface falls short of a predetermined maximum curve value at each point of the target surface and in each direction along the target surface.

4. Surface treatment device according to claim 1 or 3,
**characterised in that** the planning module is designed to minimise the volume by:
- the target surface being formed as a covering surface of the actual surface, and
- the target surface being laid at a predetermined minimal distance to the protrusion of the actual surface protruding furthest and/or
- the target surface being laid flush with the protrusion of the actual surface protruding furthest.

5. Surface treatment device according to claim 1 or 3,
**characterised in that** the planning module is designed to minimise the volume by:
- the target surface being formed as a covering surface of the actual surface intersecting the actual surface at at least one intersection position, and
- the target surface being moved so far in the direction of the actual surface that the distance between the actual surface and the target surface at each intersection position falls short of a predetermined maximum distance and/or
- the target surface being moved so far in the direction of the actual surface that the number of the intersection positions falls short of a predetermined maximum number.

6. Surface treatment device according to any one of the preceding claims,
**characterised in that** the rack is connected to a platform movable by means of platform actuators and the control module creates control data to actuate the platform actuators by means of which the platform can be moved, after processing a first control data set, to a position for processing a second control data set.

7. Surface treatment device according to any one of the preceding claims,
**characterised by** an auxiliary profile module designed to generate profile data of an auxiliary frame profile from the filtered scan data and the target surface data, wherein the profile data plots a geometry of an auxiliary frame which corresponds on a first longitudinal side to the contour of the vessel hull along a straight or curved predetermined auxiliary line and corresponds on a second longitudinal side opposite thereto to the contour of the target surface along this auxiliary line.

8. Method for the surface treatment of a vessel hull by
- a working head equipped with an application unit being moved along the vessel hull by means of an actuator device, which connects the working head to a rack, in at least two directions perpendicular to one another relative to the rack within a processing space,
**characterised by** the steps:
- scanning the vessel hull by means of a detection device to generate a digital scan data set which defines the surface geometry of the vessel hull,
- filtering the scan data set to remove such scan data, which is located outside of the vessel hull, in an electronic, automated filtering step to generate a filter scan data set,
- generating a target surface data set defining the target surface covering the vessel hull from the filter scan data set in an electronically automated planning step, wherein the target surface is defined by dividing the filtered scan data into a plurality of surface data sets in such a manner that each surface data set defines a surface which is free from discontinuities,
- generating a first work surface data set and further work surface data sets from the target surface data set, wherein each work surface data set defines a surface, which is smaller than or equal to the processing space,
- generating a first control data set and further control data sets from the work surface data sets, moving the rack to a first starting position and
- controlling the actuator device by means of the first control data set, and
- moving the rack to a further starting position and
- controlling the actuator device by means of the further control data set
and a volume is calculated in the planning step which is delimited by the target surface and the surface geometry of the vessel hull and the volume is minimised by virtually moving the target surface.

9. Method according to claim 8,
**characterised in that** a flat reference surface or a reference surface running in a continuous curve is formed in the filtering step from the scan data set, in which a plurality of the points defined by the scan data of the scan data set is located and removing, from the scan data set, such scan data that defines points, which are located outside of a predetermined tolerance distance to the reference surface.

10. Method according to claim 9,
**characterised in that** in the planning step the target surface is defined in an automated planning operation by:
- normal vectors located on the target surface being formed and the target surface being shaped such that all normal vectors point away from a vessel interior delimited by the vessel hull and
- a second mathematical derivation of the target surface being formed and the target surface being shaped such that the second mathematical derivation of the target surface falls short of a predetermined maximum curve value at each point of the target surface and in each direction along the target surface.

11. Method according to claim 9 or 10,
**characterised in that** the volume is minimised by:
- the target surface being formed as a covering surface of the actual surface, and
- the target surface being laid at a predetermined minimal distance to the protrusion of the actual surface protruding furthest and/or
- the target surface being laid flush with the protrusion of the actual surface protruding furthest.

12. Method according to claim 9 or 10,
**characterised in that** the volume is minimised by:
- the target surface being formed as a covering surface of the actual surface intersecting the actual surface at at least one intersection position, and
- the target surface being moved so far in the direction of the actual surface that the distance between the actual surface and the target surface at each intersection position falls short of a predetermined maximum distance and/or
- the target surface being moved so far in the direction of the actual surface that the number of the intersection positions falls short of a predetermined maximum number.

13. Method according to claim 9 or 10,
**characterised in that** at least one region of the vessel hull protruding outwards is processed prior to defining the target surface such that the distance by which the region protrudes outwards is reduced, in particular by machining or deformation and **in that** at least the processed region is re-scanned thereafter in order to determine an actual surface.

14. Method according to any one of the preceding claims 8 to 13,
**characterised in that** platform control data is generated from the planning data to actuate platform actuators which serve to move a movable platform to which the rack is fastened and **in that** the platform is moved, after processing a first control data set at a first platform position, to a second platform position for processing a second control data set.

15. Method according to any one of the preceding claims 8 to 14,
**characterised in that**
- prior to a sanding operation a filler or filling material is applied to the vessel hull,
- an auxiliary profile is manufactured in an automated manufacturing operation, which is manufactured with the aid of profile data, which is generated from the filtered scan data and the target surface data, wherein the profile data plots a geometry of an auxiliary frame, which corresponds on a first longitudinal side to the contour of the vessel hull along a straight or curved predetermined auxiliary line and corresponds on a second longitudinal side opposite thereto to the contour of the target surface along this auxiliary line, and
- the auxiliary profile is fastened on the vessel hull prior to applying the filler or filling material along the predetermined line.

## Revendications

1. Dispositif de traitement de surface pour une coque de navire, comprenant :
une tête de travail équipée d'une unité d'application, qui est fixée à un système actionneur qui relie la tête de travail à un châssis de cadre et peut la déplacer dans au moins deux directions perpendiculaires les unes par rapport aux autres par rapport au châssis de cadre à l'intérieur d'un espace d'usinage,
**caractérisé par** une unité de commande électronique, laquelle est reliée par une technique de signalisation au système actionneur pour commander le déplacement de la tête de travail le long des au moins deux directions, l'unité de commande comprenant :
- une interface d'entrée servant à lire des données de numérisation de la coque de navire, lesquelles décrivent la géométrie de surface de la coque de navire,
- un module de filtrage qui est réalisé pour supprimer des données de numérisation qui se situent en dehors de la coque de navire,
- un module de planification, lequel est couplé, par une technique de signalisation, au module de filtrage et est réalisé pour définir à partir des données de numérisation filtrées une surface théorique enveloppant la coque de navire à l'aide de données de surface théorique, dans lequel la surface théorique est définie par une répartition des données de numérisation filtrées en plusieurs jeux de données de zone de telle manière que chaque jeu de données de zone définit une zone qui est sans discontinuité,
- un module de préparation de travail, lequel est couplé, par une technique de signalisation, au module de planification et est réalisé pour créer, à partir des données de surface théorique, une pluralité de jeux de données de zone de travail, dans lequel chaque jeu de données de zone de travail définit une zone qui est inférieure ou égale à l'espace d'usinage, et
- un module de commande, lequel est couplé, par une technique de signalisation, au module de préparation de travail et est réalisé pour créer, à partir de chaque jeu de données de zone de travail, un jeu de données de commande pour le système actionneur, et
- une interface de sortie servant à envoyer les jeux de données de commande au système actionneur, et
dans lequel le module de planification est réalisé pour calculer un volume, lequel est délimité par la surface théorique et la géométrie de surface de la coque de navire, et le volume est minimisé par un décalage virtuel de la surface théorique.

2. Dispositif de traitement de surface selon la revendication 1,
**caractérisé en ce que** le module de filtrage est réalisé pour former, à partir des données de numérisation, une surface de référence plane ou s'étendant en une incurvation permanente, dans laquelle se situe une pluralité des points de données de numérisation, et pour supprimer des points de données de numérisation, lesquels se situent en dehors d'une distance de tolérance prédéfinie par rapport à la surface de référence, du jeu de données de numérisation.

3. Module de traitement de surface selon la revendication 1,
**caractérisé en ce que** le module de planification est réalisé pour définir la surface théorique dans une opération de planification automatisée **en ce que** :
- des vecteurs normaux se trouvant sur la surface théorique sont formés et la surface théorique est formée de telle sorte que tous les vecteurs normaux s'éloignent d'un espace intérieur de navire délimité par la coque de navire, et
- une deuxième déviation mathématique de la surface théorique est formée et la surface théorique est formée de telle sorte que la deuxième déviation mathématique de la surface théorique reste inférieure, au niveau de chaque emplacement de la surface théorique et dans chaque direction le long de la surface théorique ; à une valeur d'incurvation maximale prédéfinie.

4. Dispositif de traitement de surface selon la revendication 1 ou 3,
**caractérisé en ce que** le module de planification est réalisé pour minimiser le volume **en ce que** :
- la surface théorique est formée sous la forme d'une surface d'enveloppement de la surface réelle, et
- la surface théorique est placée à une distance minimale prédéfinie par rapport à une partie surélevée, dépassant le plus, de la surface réelle, et/ou
- la surface théorique est placée en affleurement par rapport à la partie surélevée dépassant le plus de la surface réelle.

5. Dispositif de traitement de surface selon la revendication 1 ou 3,
**caractérisé en ce que** le module de planification est réalisé pour minimiser le volume **en ce que** :
- la surface théorique est formée sous la forme d'une surface d'enveloppement, coupant la surface réelle au niveau d'au moins une position de coupe, de la surface réelle, et
- la surface théorique est décalée si loin en direction de la surface réelle que la distance entre la surface réelle et la surface théorique reste inférieure au niveau de chaque position de coupe à une distance maximale prédéfinie, et/ou
- la surface théorique est décalée si loin en direction de la surface réelle que le nombre des positions de coupe reste inférieur à un nombre maximal prédéfini.

6. Dispositif de traitement de surface selon l'une quelconque des revendications précédentes,
**caractérisé en ce que** le châssis de cadre est relié à une plate-forme pouvant être déplacée au moyen d'actionneurs de plate-forme et le module de commande crée des données de commande servant à piloter les actionneurs de plate-forme, au moyen desquels la plate-forme peut être déplacée après traitement d'un premier jeu de données de commande vers une position pour un traitement d'un deuxième jeu de données de commande.

7. Dispositif de traitement de surface selon l'une quelconque des revendications précédentes,
**caractérisé par** un module profilé auxiliaire, lequel est réalisé pour générer, à partir des données de numérisation filtrées et des données de surface théorique, des données de profil d'un profil de cadre auxiliaire, dans lequel les données de profil décrivent une géométrie d'un cadre auxiliaire, qui correspond, sur un premier côté longitudinal, au contour de la coque de navire le long d'une ligne auxiliaire droite ou incurvée prédéfinie et correspond, sur un second côté longitudinal lui faisant face, au contour de la surface théorique le long de ladite ligne auxiliaire.

8. Procédé servant au traitement de surface d'une coque de navire, en ce que
- une tête de travail équipée d'une unité d'application est déplacée le long de la coque de navire au moyen d'un système actionneur, qui relie la tête de travail à un châssis de cadre, dans au moins deux directions perpendiculaires les unes par rapport aux autres par rapport au châssis de cadre à l'intérieur d'un espace d'usinage,
**caractérisé par** les étapes suivantes :
- de numérisation de la coque de navire au moyen d'un système de détection servant à générer un jeu de données de numérisation numérique, qui définit la géométrie de surface de la coque de navire,
- de filtrage du jeu de données de numérisation pour supprimer de telles données de numérisation qui se situent en dehors de la coque de navire, lors d'une étape de filtrage électronique automatisée servant à générer un jeu de données de numérisation filtrées
- de génération d'un jeu de données de surface théorique définissant une surface théorique enveloppant la coque de navire à partir du jeu de données de numérisation filtrées lors d'une étape de planification automatisée de manière électronique, dans lequel la surface théorique définit, par une répartition des données de numérisation filtrées en plusieurs jeux de données de surface, de telle manière que chaque jeu de données de zone définit une zone qui est sans discontinuité,
- de génération d'un premier jeu de données de face de travail et d'autres jeux de données de face de travail à partir du jeu de données de surface théorique, dans lequel chaque jeu de données de face de travail définit une zone qui est inférieure ou égale à l'espace d'usinage,
- de génération d'un premier jeu de données de commande et d'autres jeux de données de commande à partir des jeux de données de face de travail, de déplacement du châssis de cadre au niveau d'une première position de départ, et
- de commande du système actionneur au moyen du premier jeu de données de commande, et
- de déplacement du châssis de cadre au niveau d'une autre position de départ, et
- de commande du système actionneur au moyen de l'autre jeu de données de commande
et un volume est calculé lors de l'étape de planification, lequel est délimité par la surface théorique et la géométrie de surface de la coque de navire et le volume est minimisé par décalage virtuel de la surface théorique.

9. Procédé selon la revendication 8,
**caractérisé en ce qu'**est formée, lors de l'étape de filtrage, à partir du jeu de données de numérisation, une surface de référence plane ou s'étendant en une incurvation permanente, dans laquelle se situe une pluralité des points définis par les données de numérisation du jeu de données de numérisation, et la suppression de telles données de numérisation qui définissent des points qui se situent en dehors d'une distance de tolérance prédéfinie par rapport à la surface de référence, du jeu de données de numérisation.

10. Procédé selon la revendication 9,
**caractérisé en ce que**, lors de l'étape de planification, la surface théorique est définie lors d'une opération de planification automatisée **en ce que** :
- des vecteurs normaux se trouvant sur la surface théorique sont formés et la surface théorique est formée de telle sorte que tous les vecteurs normaux s'éloignent d'un espace intérieur de navire délimité par la coque de navire, et
- une deuxième déviation mathématique de la surface théorique est formée et la surface théorique est formée de telle sorte que la deuxième déviation mathématique de la surface théorique reste inférieure, au niveau de chaque emplacement de la surface théorique et dans chaque direction le long de la surface théorique, à une valeur d'incurvation maximale prédéfinie.

11. Procédé selon la revendication 9 ou 10,
**caractérisé en ce que** le volume est minimisé **en ce que** :
- la surface théorique est formée sous la forme d'une surface d'enveloppement de la surface réelle, et
- la surface théorique est placée à une distance minimale prédéfinie par rapport à une partie surélevée, dépassant le plus, de la surface réelle, et/ou
- la surface théorique est placée en affleurement par rapport à la partie surélevée, dépassant le plus, de la surface réelle.

12. Procédé selon la revendication 9 ou 10,
**caractérisé en ce que** le volume est minimisé **en ce que** :
- la surface théorique est formée sous la forme d'une surface d'enveloppement, coupant la surface réelle au niveau d'au moins une position de coupe, de la surface réelle, et
- la surface théorique est décalée si loin en direction de la surface réelle que la distance entre la surface réelle et la surface théorique reste inférieure, au niveau de chaque position de coupe, à une distance maximale prédéfinie, et/ou
- la surface théorique est décalée si loin en direction de la surface réelle que le nombre des positions de coupe reste inférieur à un nombre maximal prédéfini.

13. Procédé selon la revendication 9 ou 10,
**caractérisé en ce que**, avant de définir la surface théorique, au moins une région dépassant vers l'extérieur de la coque de navire est usinée de telle sorte que la distance de ladite région dépassant vers l'extérieur est réduite, en particulier par usinage par enlèvement de matière ou par déformation, et qu'au moins la région usinée est par la suite à nouveau numérisée pour définir une surface réelle.

14. Procédé selon l'une quelconque des revendications 8 à 13 précédentes,
**caractérisé en ce que** sont générées, à partir des données de planification, des données de commande de plate-forme servant à piloter des actionneurs de plate-forme, lesquelles servent à déplacer une plate-forme mobile, à laquelle est fixé le châssis de cadre, et que la plate-forme est déplacée, après traitement d'un premier jeu de données de commande au niveau d'une première position de plate-forme, vers une deuxième position de plate-forme pour un traitement d'un deuxième jeu de données de commande.

15. Procédé selon l'une quelconque des précédentes 8 à 14,
**caractérisé en ce que**
- un matériau à étaler ou de remplissage est appliqué sur la coque de navire avant une opération de ponçage,
- lors d'une opération de finition automatisée, un profil auxiliaire est produit, lequel est produit à l'aide de données de profil qui sont générées à partir des données de numérisation filtrées et des données de surface théorique, dans lequel les données de profil décrivent une géométrie d'un châssis auxiliaire, qui correspond, sur un premier côté longitudinal, au contour de la coque de navire le long d'une ligne auxiliaire droite ou incurvée prédéfinie et, sur un second côté longitudinal lui faisant face, au contour de la surface théorique le long de ladite ligne auxiliaire, et
- le profil auxiliaire est fixé avant l'application du matériau à étaler ou de remplissage le long de la ligne prédéfinie sur la coque de navire.
